# Europäisches Patentamt

## European Patent Office

## Office européen des brevets

(19)

(11) **EP 1 391 445 A1**

(12) **EUROPEAN PATENT APPLICATION**
published in accordance with Art. 158(3) EPC

(43) Date of publication:
**25.02.2004 Bulletin 2004/09**

(21) Application number: **02728078.3**

(22) Date of filing: **17.05.2002**

(51) Int Cl.7: **C05B 5/00**, C05D 3/04

(86) International application number:
**PCT/JP2002/004785**

(87) International publication number:
**WO 2002/092537 (21.11.2002 Gazette 2002/47)**

(84) Designated Contracting States:
**AT BE CH CY DE DK ES FI FR GB GR IE IT LI LU
MC NL PT SE TR**

(30) Priority: **17.05.2001 JP 2001147811**

(71) Applicant: **JFE Steel Corporation
Tokyo (JP)**

(72) Inventors:
- **TAKAHASHI, Tatsuhito,
  c/o intellectual PropertyDpt
  Chiyoda-ku, Tokyo 100-0011 (JP)**
- **TANABE, Haruyoshi,
  Intellectuel Property Section
  Yokohama shi,Kanagawa 230-8611 (JP)**
- **YAO, Yasuko, c/o JFE R&D Corporation
  Kawasaki ku ,Kawasaki-shi Kanagawa210085
  (JP)**
- **INOUE, Shigeru, NK Techno Service CO LTD
  Kawasaki-ku ,Kawasaki shi Kanagawa210085
  (JP)**

- **WATANABE, Keiji,
  Intellectual Property Departement
  Chiyoda-ku, Tokyo 100-0011 (JP)**
- **ISOO, Tsuneo, c/o Intell Property Departement
  Chiyoda-ku, Tokyo 100-0011 (JP)**
- **KOHIRA, Satoshi,
  c/o Intell Property Departement
  Chiyoda-ku, Tokyo 100-0011 (JP)**
- **KAWABATA, Ryo,
  c/o Intell Property Departement
  Chiyoda-ku, Tokyo 100-0011 (JP)**
- **SHIROYAMA, Akira,
  c/o Intellectual Property Depart
  Chiyoda-ku, Tokyo 100-0011 (JP)**
- **MATSUNO, Hidetoshi,
  c/o Intellectual Property dept
  Chiyoda-ku, Tokyo 100-0011 (JP)**
- **MURAI, Takeshi, c/o Intellectual Property dept
  Chiyoda-ku, Tokyo 100-0011 (JP)**

(74) Representative: **HOFFMANN - EITLE
Patent- und Rechtsanwälte
Arabellastrasse 4
81925 München (DE)**

(54) **MATERIAL FOR PHOSPHATE FERTILIZER AND METHOD FOR PRODUCTION THEREOF**

(57)     Provided is a raw material for phosphate fertilizer having excellent fertilizer characteristics, which raw material consists essentially of a slag containing phosphate generated from dephosphorization reaction in molten iron, and is a method for manufacturing the raw material suitable for manufacturing the phosphate fertilizer. The raw material for phosphate fertilizer consists essentially of a slag containing phosphate generated from dephosphorization reaction in molten iron. As for the slag composition, the phosphate content satisfies the formula (1), and preferably the formula (2):

$$[P_2O_5] \geqq 5.6 \times [F] + 7 \qquad (1)$$

$$[P_2O_5] \geqq 5.6 \times [F] + 10 \qquad (2)$$

where, $[P_2O_5]$ is the phosphate content in slag, (mass%), and $[F]$ is the fluorine content in slag, (mass%).

The method for manufacturing the raw material thereof is a method of charging an oxygen source and a CaO source to a molten iron which decreases the Si concentration therein to a sufficient level, thus inducing the dephosphorization reaction in the molten iron, or a method of charging a CaO source and a gas oxygen in respective specified configurations and conditions to the molten iron, thus inducing the dephosphorization reaction in the molten iron.

EP 1 391 445 A1

# FIG. 2

(a)

(b)

Graph (a): Y-axis: P$_2$O$_5$ (MASS%), X-axis: F CONTENT (MASS%)
Legend:
◇ TOTAL PHOSPHATE
○ CITRIC-SOLUBLE PHOSPHATE

Graph (b): Y-axis: P$_2$O$_5$ (MASS%), X-axis: F CONTENT (MASS%)
Legend:
◇ TOTAL PHOSPHATE
○ CITRIC-SOLUBLE PHOSPHATE

**Description**

**TECHNICAL FIELD**

The present invention rebates to a raw material for phosphate fertilizer, which raw material consists essentially of slag containing phosphate generated from dephosphorization reaction in molten iron, and a method for manufacturing thereof.

**BACKGROUND ART**

Currently many of phosphate fertilizers are manufactured from phosphate rock as the raw material. In the future, however, the supply of phosphorus rock as the raw material may become short. On the other hand, there is a request for effective use of slag which is collected in the iron and steel making processes. Responding to the movement, studies of utilizing the slag which contains phosphate as a raw material for phosphate fertilizer have recently become extensive. Since the phosphate existing in slag is not water-soluble, the slag is expected as a slow-acting fertilizer suitable for the promotion of environment-conserving agriculture.

Thomas phosphate fertilizer is a most widely known phosphate fertilizer manufactured from slag as the raw material. Thomas fertilizer uses slag as the raw material, which slag is generated in the process of smelting Thomas molten iron produced from high phosphorus rock as the raw material, (normally [P] = approximately 1.8 to 2.0 mass%), and the slag has a characteristic of high concentration of phosphate, ranging from 16 to 22 mass%. The technology using the Thomas molten iron, however, has limitations and problems of using high phosphorus rock as the raw material, having high P concentration of molten iron after dephosphorization, generating large quantity of slag, thus the technology is currently adopted very little.

For the case of dephosphorization treatment of molten iron prepared from common iron ore as the raw material, (molten iron pretreatment), the P concentration in the molten iron before dephosphorization is approximately from 0.1 to 0.2 mass%.
Accordingly, the phosphate concentration in the dephosphorized slag which is generated and collected in conventional general dephosphorization treatment process is only a level of 5 mass%, thus that type of slag does not have high concentration of phosphate applicable to the raw material for phosphate fertilizer.

In prior art, following-described technologies, for example, are provided to obtain slag having high concentration of phosphate applicable to a raw material for phosphate fertilizer.

① A method of executing the dephosphorization of molten iron in two stage, (JP-A-8-3612, (the term "JP-A" referred to herein signifies "Japanese Patent Laid-Open Publication")), in which the slag containing phosphate generated in the first stage of dephosphorization of molten iron is charged to a blast furnace as a part of the blast furnace charge raw materials to increase the P concentration in the molten iron tapped from the blast furnace, and the slag having high concentration of phosphate is collected in the second stage of molten iron dephosphorization. A method of collecting slag having high concentration of phosphate, (JP-A-8-3613), in which the slag that contains phosphate generated during the converter smelting applied after the molten iron dephosphorization is charged to a blast furnace as a part of the blast furnace charge materials to increase the P concentration of molten iron tapped from the blast furnace, and then the slag having high concentration of phosphate is collected by the molten iron dephosphorization.

② A method of collecting slag having high concentration of phosphate, (JP-A-11-158526), in which a slag that contains phosphate obtained from dephosphorization treatment of molten iron containing 0.15 mass% or less of P concentration is charged to a molten iron bath, where the P in the slag is reduced and extracted into the molten iron bath, to produce a molten iron containing 0.5 to 3 mass% P, followed by applying dephosphorization treatment to the molten iron after removing slag, thus the slag having high concentration of phosphate is collected.

④ A method of separating and collecting a phase having high concentration of phosphate from a slag generated in molten iron dephosphorization, (JP-A-58-61210).

Those above-described conventional technologies are, however, necessary to add special step to obtain slag having high concentration of phosphate, which raises a problem of increased cost for dephosphorization treatment and for slag collection. Furthermore, the technologies ① , ② require the increase in the P concentration in the molten iron, which may raise a problem of difficulty in decreasing the P concentration of molten iron after the dephosphorization treatment to a specific level. It was also found that, even when these conventional technologies achieve the increase in the phosphate concentration in the slag, the phosphate in the slag is insoluble, in many cases, thus failing to attain satisfactory fertilizer characteristics expected for the level of obtained phosphate concentration.

## DISCLOSURE OF THE INVENTION

An object of the present invention is to provide a raw material for phosphate fertilizer having excellent fertilizer characteristics, which raw material for fertilizer contains phosphate generated by dephosphorization reaction in molten iron.

Another object of the present invention is to provide a method for manufacturing a raw material for phosphate fertilizer, which method is suitable for obtaining the above-described raw material for phosphate fertilizer.

A further object of the present invention is to provide a phosphate fertilizer using the above described raw material for phosphate fertilizer, particularly to provide a phosphate fertilizer which does not raise problems such as emissions during fertilizer application, runoff carried by rainwater, and hindrance of water and air. permeation of ground, and which gives favorable handling.

Many of the conventional technologies for utilizing slag as a raw material for phosphate fertilizer focused on the viewpoint of how to increase the concentration of phosphate in slag to a level suitable for the phosphate fertilizer by adding a special step to the manufacturing process.

Contrary to these conventional technologies, the inventors of the present invention studied the compositions and manufacturing methods of slag in terms of: ① increasing the concentration of phosphate in slag to a level of easy application as a fertilizer in relation to the amount of fertilizer applied and the like; ② securing the excellent fertilizer characteristics by increasing the concentration of citric-soluble phosphate among the phosphates in the slag, (citric-soluble phosphate designates the phosphate which is able to be absorbed when a plant generates an acid from the roots thereof). Through the study, the inventors of the present invention have derived the following-described findings.

(1) From the viewpoint of obtaining slag having high concentration of phosphate, suitable for a raw material for phosphate fertilizer, a CaO source and an oxygen source are added to a molten iron which sufficiently decreased the Si content thereof to induce the dephosphorization reaction in the molten iron, or the CaO source and the oxygen source are charged in respective specific configurations or under respective specific conditions to the molten iron to induce the dephosphorization reaction in the molten iron, or both of the above-given treatment are combined, thus the treatment can be conducted at very high dephosphorization efficiency (reaction efficiency of dephosphorization), and the quantity of generated slag is extremely small, compared with conventional technologies. As a result, when a molten iron having the P concentration of an approximate range from 0.1 to 0.2 mass%, which is obtained in normal blast furnace, is used, a single step of P-extraction provides a slag having high concentration of phosphate, suitable for a raw material for phosphate fertilizer, is obtained without adding special step such as the step of concentrating P in molten iron.

(2) The dephosphorization treatment which is given in the step of preliminary treatment of molten iron uses a smelting agent consisting mainly of CaO. To obtain high dephosphorization reaction efficiency in the dephosphorization treatment, however, it is understood that prompt slag formation (fusion) of the added smelting agent (CaO) is important. On the other hand, it is understood that the dephosphorization reaction proceeds more favorably at low temperatures from the equilibrium point of view. Accordingly, the treatment of molten iron is given at relatively low temperatures. That low temperatures, however, are difficult in slag formation of CaO. Consequently, conventional technologies adopt $CaF_2$ (fluorite) as the enhancer of slag formation of CaO, and generally the dephosphorization treatment of molten iron is carried out by charging $CaF_2$ by approximate amounts from 20 to 30 mass% to the quantity of CaO. As a result, the slag collected in the dephosphorization treatment step contains fluorine at an amount corresponding to the charged amount of $CaF_2$. That type of treatment, however, raises a problem that, when the slag is used as the raw material for fertilizer, sufficient citric-soluble phosphate concentration cannot be attained because the fluorine in the slag fixes the phosphate in the slag, thus the generated fluorine compound (fluoridated apatite) contains small percentage of citric-soluble phosphate. To solve that kind of problem, when the slag obtained in above-given (1) having increased concentration of phosphate is adjusted to a slag composition that is regulated to a specific condition of the phosphate concentration and the fluorine concentration, the citric-soluble phosphate concentration requested as a fertilizer is fully attained. In particular, since the slag described in above-given (1) is stably obtained even under a treatment condition of minimized charged quantity of $CaF_2$, (or without charge of $CaF_2$), the fluorine content can be minimized to readily assure the necessary citric-soluble phosphate concentration.

Based on the above-described findings, the raw material for phosphate fertilizer provided by the present invention is the following.

(I) A raw material for phosphate fertilizer consists essentially of a slag which contains phosphate formed in a dephosphorization reaction in molten iron, and the phosphate content satisfies the formula (1)

$$[P_2O_5] \geqq 5.6 \times [F] + 7 \tag{1}$$

where, $[P_2O_5]$ is the phosphate content in slag, (mass%), and $[F]$ is the fluorine content in slag, (mass%).

(II) A raw material for phosphate fertilizer consists essentially of a slag which contains phosphate formed in a dephosphorization reaction in molten iron, and the phosphate content satisfies the formula (2)

$$[P_2O_5] \geqq 5.6 \times [F] + 10 \tag{1}$$

where, $[P_2O_5]$ is the phosphate content in slag, (mass%), and $[F]$ is the fluorine content in slag, (mass%).

According to the aspect (I) of the present invention, a raw material for phosphate fertilizer giving favorable phosphate solubilization property is provided by the presence of 7 mass% or more of citric-soluble phosphate in the slag.

According to the aspect (II) of the present invention, a raw material for phosphate fertilizer giving particularly favorable solubilization property of phosphate is provided by the presence of 10 mass% or more of citric-soluble phosphate in the slag.

Regarding the above-described slag as the raw material for phosphate fertilizer, it is preferable that the fluorine content is as small as possible to increase the content of citric-soluble phosphate. In particular, it is most preferable that the fluorine does substantially not exist, or that no fluorine exists other than the fluorine which unavoidably enters during the slag-generation step.

The above-described raw material for phosphate fertilizer becomes the phosphate fertilizer without applying further treatment, or becomes the main raw material for the phosphate fertilizer. Therefore, the present invention provides that type of phosphate fertilizer.

To manufacture a phosphate fertilizer from the above-described raw material for phosphate fertilizer, the raw material for phosphate fertilizer is preferably subjected to treatment of pulverizing and/or seizing.

The above-described raw material for phosphate fertilizer, specifically the raw material for phosphate fertilizer after receiving the treatment of pulverizing and/or sizing, is preferably subjected to a granulation step using an adequate binder before becoming to the phosphate fertilizer. That kind of phosphate fertilizer very little raises the problems such as emissions during fertilizer application, runoff carried by rainwater, and hindrance of ground water penetration and air permeation, and which gives favorable handling property. In addition, that kind of phosphate fertilizer is configured by grains in regular and near-spherical shape so that it gives easiness in handling.

As for the binder applied to the above-described granulation step, starch, magnesium sulfate, and lignin are particularly preferred from the point of granulation property and of collapsibility after application of fertilizer particles, and it is preferable that at least one of them is used as the main component thereof. As of these binders, starch is most suitable because starch allows forming hardest granulates.

To obtain the slag (raw material for phosphate fertilizer) that satisfies the above-given compositions and conditions, it is necessary to manufacture the slag by a method to attain high concentration of phosphate with least amount of charged $CaF_2$, or substantially without charge of $CaF_2$. Furthermore, from the point of slag manufacturing cost and of total treatment cost, the manufacturing method is necessary be executable in a simple facility and at low cost as far as possible without adding special step of increasing the concentration of phosphate in slag, (for example, a step of concentrating P in molten iron). Particularly suitable methods for manufacturing that kind of slag include: ① a method of inducing dephosphorization reaction in molten iron by charging an oxygen source and a CaO source to the molten iron having sufficiently decreased Si concentration; and ② a method of inducing the dephosphorization reaction in molten iron by charging a CaO source and oxygen gas in respective specific configurations and under respective specific conditions to the molten iron. According to these manufacturing methods, a slag having high concentration of phosphate, (a raw material for phosphate fertilizer), is manufactured efficiently and at low cost with very small quantity of charged $CaF_2$ or substantially without charge of $CaF_2$.

That is, according to the above-described manufacturing method ①, since the treatment is given to a molten iron in which the Si concentration is fully decreased, high dephosphorization efficiency is attained even under the condition of minimized quantity of charged $CaF_2$, or without charge of $CaF_2$, the generated $SiO_2$ amount is small, and the required amount of charged CaO source is small, thus the generated slag quantity is small. As a result, a slag having high concentration of phosphate and containing very small amount of fluorine is efficiently manufactured at low cost without adding special step.

According to the above-described manufacturing method ②, since the treatment is given by charging the CaO source and the oxygen source in respective specific configurations and under respective specific conditions, high dephosphorization efficiency is attained even under a condition of very small quantity of charged $CaF_2$ or without charge of $CaF_2$, thus the quantity of generated slag is small. As a result, a slag having high concentration of phosphate and containing very small amount of fluorine is efficiently manufactured at low cost without adding special step.

As for the method for manufacturing that type of raw material for phosphate fertilizer, the present invention provides the manufacturing method given below.

(1) A method for manufacturing raw material for phosphate fertilizer has the steps of: charging a CaO source and an oxygen source to a molten iron containing 0.07 mass% or less Si to induce dephosphorization reaction in the molten iron; and collecting a slag containing phosphate, generated by the dephosphorization reaction, as the raw material for phosphate fertilizer.

(2) A method for manufacturing raw material for phosphate fertilizer has the steps of charging a CaO source and an oxygen source into a vessel holding a molten iron therein to induce dephosphorization reaction in the molten iron, and collecting a slag containing phosphate, generated by the dephosphorization reaction, as the raw material for phosphate fertilizer: wherein at least a part of the gas oxygen and of the CaO source is blown against the surface of molten iron bath via a top-blowing lance to induce dephosphorization reaction in the molten iron; and the charge rate B (kg/min/ton-molten iron) of the CaO source blown against the surface of molten iron bath, converted to CaO, satisfies the formula (3), preferably the formula (4), in relation to the charge rate A ($Nm^3$/min/ton-molten iron) of the oxygen source being charged into the vessel, converted to gas oxygen:

$$0.3 \leqq A/B \leqq 7 \qquad (3)$$

$$1.2 \leqq A/B \leqq 2.5 \qquad (4)$$

(3) A method for manufacturing raw material for phosphate fertilizer has the steps of charging a CaO source and an oxygen source into a pot type vessel or a torpedo car type vessel, holding a molten iron therein, to induce dephosphorization reaction in the molten iron, and collecting a slag containing phosphate generated in the dephosphorization reaction as the raw material for phosphate fertilizer; wherein at least a part of the gas oxygen and of the CaO source is blown against the surface of molten iron bath via a top-blowing lance, and a gas containing a powder is blown into the molten iron via an immersion lance and/or a blowing nozzle.

According to the above-given manufacturing method (1), since the treatment is given to the molten iron containing 0.07 mass% or less Si, (preferably 0.05 mass% or less, and more preferably 0.03 mass% or less), by charging a CaO source and an oxygen source to induce dephosphorization reaction, the basicity of slag increases to attain high phosphorus-distribution Lp, which gives high dephosphorization efficiency and very small amount of generated slag even with very small quantity of charged $CaF_2$ or with substantially no charge of $CaF_2$. As a result, a single treatment stage can manufacture a raw material (slag) for phosphate fertilizer containing very little amount of fluorine and having high concentration of phosphate without adding special step.

The above-described manufacturing method (2) provides the effect given below. That is, blow of gas oxygen against the surface of molten iron bath induces generation of large amount of FeO on the surface of molten iron bath (particularly in the surface area of molten iron bath where the gas oxygen is blown), which creates highly advantageous condition to enhance the slag formation of CaO. By blowing the CaO source against the surface of molten iron bath where that large amount of FeO is generated and where large amount of phosphorous oxide exists, and by charging oxygen thereto, the charge rate of CaO source satisfies the generation rate of FeO in the slag so that the CaO efficiently exists in the vicinity of FeO and phosphorus oxide, which gives high dephosphorization reaction efficiency. As a result, high dephosphorization efficiency is attained with very small amount of charged $CAF_2$ or with substantially no charge of $CaF_2$, and the generated amount of slag decreases. Thus, a single treatment stage can manufacture a raw material (slag) for phosphate fertilizer containing very small amount of fluorine and having high concentration of phosphate without adding special step.

According to the manufacturing method (2), the treatment is applied to particularly a molten iron of low Si content, giving high dephosphorization reaction efficiency even in a high treatment temperature domain where conventional technologies are accepted as difficult to perform, owing to the treatment condition of small amount of charged $CaF_2$ or without charge of $CaF_2$.

According to the above-described manufacturing method (3), the following-given effect is attained. That is, blow of gas oxygen against the surface of molten iron bath induces generation of large amount of FeO on the surface of molten iron bath (particularly in the surface area of molten iron bath where the gas oxygen is blown), which creates a highly advantageous condition to enhance the slag formation of CaO. By blowing the CaO source against the surface of molten iron bath where that large amount of FeO is generated, the slag formation of CaO is effectively enhanced. Adding to the supply of the gas oxygen and the CaO source against the surface of molten iron bath, when a gas containing a powder is blown into the molten iron via an immersion nozzle or a blowing nozzle, the molten iron is agitated to efficiently supply the molten iron to the reaction interface, which effectively enhances the dephosphorization reaction to attain very high dephosphorization efficiency. As a result, in the dephosphorization reaction treatment of molten iron using a pot type vessel or a torpedo type vessel, high dephosphorization efficiency is attained with very little amount of charged $CaF_2$ or substantially without charge of $CaF_2$, and the amount of generated slag becomes small. Consequently, a single treatment stage can manufacture a raw material (slag) for phosphate fertilizer containing very small amount of fluorine and having high concentration of phosphate without adding special step.

In addition, the raw material for fertilizer is manufactured using the raw material for phosphate fertilizer, obtained by each of the above-given manufacturing methods. Therefore, the present invention provides that kind of method for manufacturing phosphate fertilizer. On manufacturing the phosphate fertilizer, it is preferred to execute the step of pulverizing and/or seizing the above-described raw material for phosphate fertilizer, and to execute the step of granulating thereof while adding a binder to the raw material for phosphate fertilizer.

## BRIEF DESCRIPTION OF THE DRAWINGS

Fig. 1 is a graph showing the citric-solubilization percentage of phosphate in a slag having respective compositions given in Table 1 in relation to the fluorine content in the slag;

Fig. 2 is a graph showing the slag composition conditions for raw materials for phosphate fertilizer according to the present invention;

Fig. 3 illustrates an example of granulation step for the raw material for phosphate fertilizer according to the present invention;

Fig. 4 illustrates another example granulation step for the raw material for phosphate fertilizer according to the present invention;

Fig. 5 is a graph showing the relation between the Si content in molten iron before the dephosphorization reaction treatment and the dephosphorization efficiency;

Fig. 6 is a graph showing the relation between the molten iron temperature at the beginning of dephosphorization reaction treatment and the dephosphorization efficiency;

Fig. 7 is a graph showing the relation between the molten iron temperature at the end of dephosphorization reaction treatment and the dephosphorization efficiency;

Fig. 8 is a graph showing the relation between the molten iron temperature at the beginning of dephosphorization reaction treatment and the dephosphorization efficiency for the case that a CaO source and an oxygen source are charged against the surface of molten iron bath or into the molten iron bath at separate positions or at the same position with each other;

Fig. 9 is a graph showing the relation between the molten iron temperature at the beginning of dephosphorization reaction treatment and the dephosphorization efficiency for the case that quicklime is used as the CaO source and that the CaO source and the oxygen source are charged against the surface of molten iron bath or into the molten iron bath at separate positions or at the same position with each other, and for the case that an FeO-CaO-base solvent is used as the [CaO source + oxygen source];

Fig. 10 illustrates an example of the modes for carrying out the method according to the present invention using a converter type vessel;

Fig. 11 is a graph showing the relation between the Si concentration in molten iron, the molten iron temperature at the end of dephosphorization reaction treatment, and the lime dephosphorization efficiency in the dephosphorization reaction treatment without charging $CaF_2$;

Fig. 12 is a graph showing the relation between the quantity of charged $CaF_2$ and the lime dephosphorization efficiency in the dephosphorization reaction treatment at temperatures of molten iron at the end of dephosphorization treatment of from 1360°C to 1450°C;

Fig. 13 is a graph showing the influence of the ratio of the CaO source charge rate X to the oxygen gas charge rate Y, X/Y, on the dephosphorization percentage in the dephosphorization reaction treatment using a pot type vessel;

Fig. 14 is a graph showing the relation between the percentage of the charged quantity of CaO via a top-blowing lance to the total added quantity of CaO source and the dephosphorization percentage in the dephosphorization reaction treatment using a pot type vessel for the case that total amount of the CaO source is blown against the surface of molten metal bath via a top-blowing lance and for the case that the total amount of the CaO source is injected into the molten iron via an immersion lance and/or a blowing nozzle;

Fig. 15 is a graph showing the relation between the Si concentration in molten iron before the dephosphorization reaction treatment and the necessary quantity of CaO source (lime) in using a pot type vessel for the cases of the method according to the present invention and of the conventional method;

Fig. 16 illustrates an example of the mode carrying out the present invention using a pot type vessel; and

Fig. 17 is a g.raph showing the relation between the ratio of the oxygen charge rate A to the CaO source charge rate B, A/B, and the phosphorous concentration in molten iron after the dephosphorization reaction treatment, in Embodiment 2.

**Detailed Description of the Invention**

The raw material for phosphate fertilizer according to the present invention consists essentially of a slag which contains phosphate formed in a dephosphorization reaction in molten iron, wherein the content of phosphate satisfies the formula (1), and preferably satisfies the formula (2):

$$[P_2O_5] \geqq 5.6 \times [F] + 7 \tag{1}$$

$$[P_2O_5] \geqq 5.6 \times [F] + 10 \tag{2}$$

where, $[P_2O_5]$ is the content of phosphate in slag, (mass%), and $[F]$ is the content of fluorine in slag, (mass%).

A typical example of that type of slag is a molten iron dephosphorized slag which is collected in the preliminary treatment step for blast furnace molten iron. The slag is, however, not limited to the one given above, and the slag as the raw material for phosphate fertilizer according to the present invention includes slag obtained by arbitrary manufacturing method. The preliminary treatment step for the blast furnace molten iron is the treatment aiming at dephosphorization, desulfurization, and the like of the molten iron, given before the decarbonization treatment step. As for the dephosphorization treatment for the molten iron, which aims mainly at dephosphorization, a smelting agent (lime or the like) which is the CaO source and an oxygen source (gas oxygen and/or solid oxygen source) are charged to the molten iron, thus the dephosphorization reaction fixes P in the molten iron to the generated slag to conduct the dephosphorization of the molten iron.

As described before, when fluorine exists in the slag, fluoridated apatite ($9CaO \cdot 3P_2O_5 \cdot CaF_2$) is generated to fix the phosphate so that the solubilization property of phosphate (citric-solubilization property) degrades totally in the slag. On the other hand, if no fluorine exists, only the hydroxyl apatite is formed even if the percentage of CaO is large, thus no degradation in solubilization property of phosphate occurs.

Table 1 shows the compositions of slag obtained by successively applying the desiliconization and desulfurization to a molten iron tapped from a blast furnace, followed by inducing dephosphorization reaction by charging a CaO source and an oxygen source to the molten iron, (hereinafter referred to as the "dephosphorization reaction treatment"). The dephosphorization reaction treatment used a converter type vessel, and applied the two methods of charge of oxygen source and CaO source: namely, (1) a method of blowing gas oxygen against the surface of molten iron bath via a top-blowing lance, while top-feeding lumps of lime (CaO source); and (2) a method of blowing lime powder (CaO source) against the surface of molten iron bath using gas oxygen as the carrier via a top-blowing lance. The respective charges were given with different charged quantities of $CaF_2$.

As shown in Table 1, the term "C-$P_2O_5$ (citric-soluble phosphate)" designates the phosphate soluble in 2% citric acid solution (pH 2), and the term "citric-solubilization percentage of phosphate" designates the percentage (mass%) of citric-soluble phosphate in total phosphate ($P_2O_5$) existing in the slag. Both of these characteristics were analyzed conforming to the respective official fertilizer analytical methods.

Table 1

| Slag | Slag composition (mass%) | | | | | | | | Citric-solubilization percentage of phosphate (%) |
|------|------|-----|-----|-----|------|------|----------|--------|------|
|  | $SiO_2$ | CaO | $Al_2O_3$ | MgO | T-Fe | F | $P_2O_5$ | C-$P_2O_5$ |  |
| A | 12 | 48 | 7 | 5 | 6 | 1.21 | 10.5 | 5.0 | 48 |
| B | 12 | 39 | 6 | 8 | 9 | 0.86 | 10.4 | 5.2 | 50 |
| C | 12 | 39 | 6 | 8 | 9 | 0.84 | 10.2 | 5.2 | 51 |
| D | 13 | 44 | 5 | 5 | 8 | 0.56 | 11.5 | 8.1 | 70 |
| E | 12 | 46 | 6 | 4 | 8 | 0.42 | 10.8 | 8.2 | 76 |

Table 1  (continued)

| Slag | Slag composition (mass%) | | | | | | | | Citric-solubilization percentage of phosphate (%) |
|---|---|---|---|---|---|---|---|---|---|
| | $SiO_2$ | CaO | $Al_2O_3$ | MgO | T-Fe | F | $P_2O_5$ | $C-P_2O_5$ | |
| F | 14 | 45 | 4 | 2 | 8 | 0.26 | 13.9 | 10.5 | 76 |
| G | 12 | 39 | 6 | 8 | 9 | 0.35 | 8.5 | 6.8 | 80 |
| H | 13 | 45 | 5 | 3 | 9 | 0.13 | 13.5 | 11.7 | 87 |
| I | 13 | 42 | 6 | 3 | 8 | 0.15 | 11.9 | 11.3 | 95 |
| J | 13 | 42 | 6 | 3 | 8 | 0.15 | 8.6 | 8.2 | 95 |
| K | 12 | 39 | 6 | 8 | 9 | 0.08 | 7.4 | 7.2 | 97 |
| L | 13 | 41 | 5 | 4 | 9 | 0.07 | 10.6 | 10.2 | 97 |
| M | 14 | 44 | 5 | 5 | 8 | 0.00 | 10.3 | 10.2 | 99 |

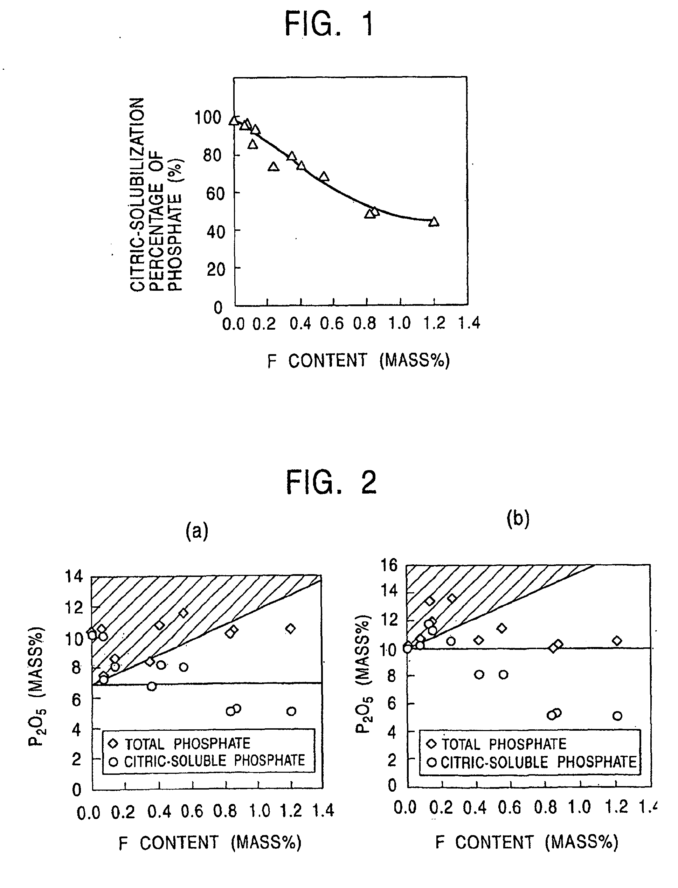

Fig. 1 is a graph showing the citric-solubilization percentage of phosphate in a slag having respective compositions given in Table 1 in relation to the fluorine content in the slag. According to the figure, the citric-solubilization percentage of phosphate of the slag which substantially does not contain fluorine is almost 100% (99%), while the slag which contains fluorine decreases the citric-solubilization percentage of phosphate with the increase in the content of fluorine. The lower limit of citric-solubilization percentage of phosphate is, however, about 50% independent of the fluorine content.

The above-described result showed that all the fluorine in slag becomes fluoridated apatite ($9CaO \cdot 3P_2O_5 \cdot CaF_2$), that the solubilization percentage of phosphate (citric-solubilization percentage) in the apatite is about 50%, and that the solubilization percentage of phosphate (citric-solubilization percentage) in compounds other than fluoridated apatite is about 100%.

Accordingly, the present invention selects the specified value (lower limit) of the quantity of citric-soluble phosphate necessary for the raw material for phosphate fertilizer to 7 mass%, preferably 10 mass%, considering the efficacy of the fertilizer applied to farmland. If the quantity of citric-soluble phosphate in fertilizer is 7 mass% or more, preferably 10 mass% or more, the quantity of applied fertilizer does not become large, and the usefulness as the fertilizer is satisfactorily secured.

As for the fluoridated apatite ($9CaO \cdot 3P_2O_5 \cdot CaF_2$), 3 x 142 g of phosphate is fixed to 38 g of F. In that case, since about 50% of the phosphate contained is citric-soluble phosphate,

$$3 \times 142(g)/38(g)/2 = 5.6$$

is derived. That is, the citric-soluble phosphate in the phosphate which becomes to fluoridated apatite is 5.6 x [F]. To contain 7 mass% or more of citric-soluble phosphate, the phosphate which becomes to fluoridated apatite is necessary to be added to the target quantity of citric-soluble phosphate. Therefore, the quantity of phosphate [$P_2O_5$] (mass%) and the quantity of fluorine [F] (mass%) in the slag are required to satisfy the formula (1)

$$[P_2O_5] \geqq 5.6 \times [F] + 7 \qquad (1)$$

Similarly, to contain the citric-soluble phosphate to 10 mass% or more, the quantity of phosphate [$P_2O_5$] (mass%) and the quantity of fluorine [F] (mass%) in the slag are required to satisfy the formula (2)

$$[P_2O_5] \geqq 5.6 \times [F] + 10 \qquad (2)$$

Fig. 2(a) shows the range of phosphate content and of the fluorine content specified by the formula (1), (shown by shaded portion). Fig. 2(b) shows the range of phosphate content and of the fluorine content specified by the formula (2), (shown by shaded portion). Each of these figures shows the content of phosphate and the content of citric-soluble phosphate in total slag for individual compositions given in Table 1 at upper and lower portions of the figure. As shown in the figures, the desired quantity of citric-soluble phosphate is secured only when the formula (1) and the formula (2) are satisfied.

Other than the above-described fluoridated apatite ($9CaO \cdot 3P_2O_5 \cdot CaF_2$), slag contains silicocarnotite ($5CaO \cdot P_2O_5 \cdot SiO_2$), nagelshmidtite ($7CaO \cdot P_2O_5 \cdot 2SiO_2$), and the like as the main compounds. Nevertheless, the phosphate existing in these compounds shows favorable solubilization property (about 100% of citric-solubilization percentage).

To increase the content of citric-soluble phosphate as far as possible, the above-described slag as the raw material for phosphate fertilizer preferably contains as small amount of fluorine as possible, and particularly it is most preferable to contain no fluorine other than the fluorine unavoidably enters during the slag-generation step. To do this, it is preferable that the quantity of charged $CaF_2$ is minimized on conducting the dephosphorization reaction in molten iron, more preferably substantially no $CaF_2$ is charged (or no $CaF_2$ is charged other than the unavoidably entered $CaF_2$).

The above-described raw material for phosphate fertilizer is used as the phosphate fertilizer without subjecting to further treatment, or becomes the main raw material for phosphate fertilizer. For the latter case, other fertilizer-component is added to an adequate amount.

The above-described raw material for phosphate fertilizer is preferably converted to the phosphate fertilizer after treated by pulverizing and/or sizing thereof.

There is no specific limitation on the method of pulverizing the raw material for phosphate fertilizer, and arbitrary method is applicable. For example, pulverization can be conducted using pulverizer such as jaw crusher, rod mill, Fred mill, and impeller breaker. The sizing may be carried out using arbitrary sieving unit. The sizing may be given by arbitrary sizing unit. The sizing treatment may be applied after pulverizing the raw material for phosphate fertilizer.

The raw material for phosphate fertilizer after treated by pulverizing and/or sizing treatment is preferably subjected to the granulation step using an adequate binder before using as the phosphate fertilizer. The phosphate fertilizer thus granulated generates very little problem of emissions during application, run-off by rainwater, and hindrance of water and air permeation of ground. In addition, that kind of phosphate fertilizer is configured by grains in regular and near-spherical shape so that it gives easiness in handling.

The method for granulating slag has no specific limitation, and general methods are applicable. For example, the pulverized slag obtained by the above-described pulverizing treatment may be mixed with a binder in a mixer, and the mixture may be granulated in a granulator while adding an adequate volume of water, followed by drying the mixture.

Applicable granulator may be the one generally used. For example, rotary dish type granulator or rotary cylindrical granulator is applicable. If the granulated slag is outside the specified grain size range, the slag is preferably recycled to the granulator directly or after applying pulverizing treatment to reuse as a part of the raw material.

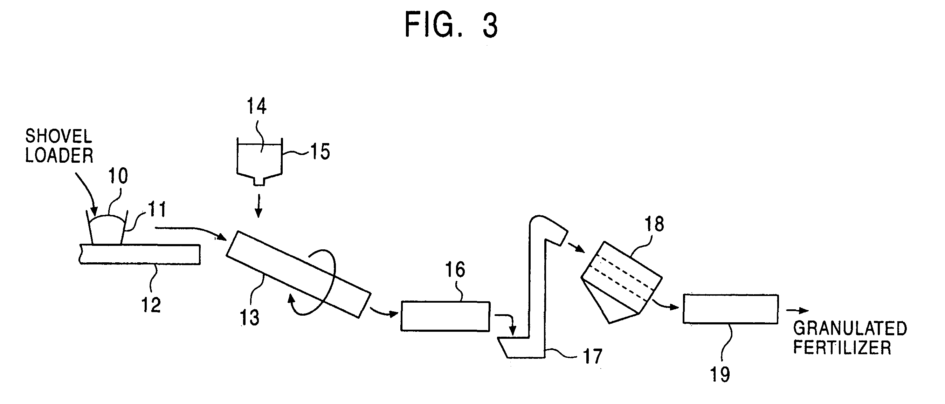

Fig. 3 shows an example of granulation step of the raw material for phosphate fertilizer. The pulverized slag (raw material for phosphate fertilizer) 10 obtained by the above-described pulverizing treatment is charged to a hopper 11 using shovel loader or the like. The weighed pulverized slag 10 is charged to a drum type rotary granulator 13 from the hopper 11 via a conveyer 12. A specific quantity of binder 14 stored in a vessel 15 is charged to the drum type rotary granulator 13. By the rotary action of the drum type rotary granulator 13, the pulverized slag 10 and the binder 14 are mixed together to become granules. After that, the granulated slug is dried in a drier 16, which is then fed to a sieve 18 via an elevator 17 to undergo sieving. The sieved slag is cooled in a cooler 19 to become the granulated fertilizer. It is also possible to sieve the slag after cooling thereof in the cooler 19 before granulating thereof.

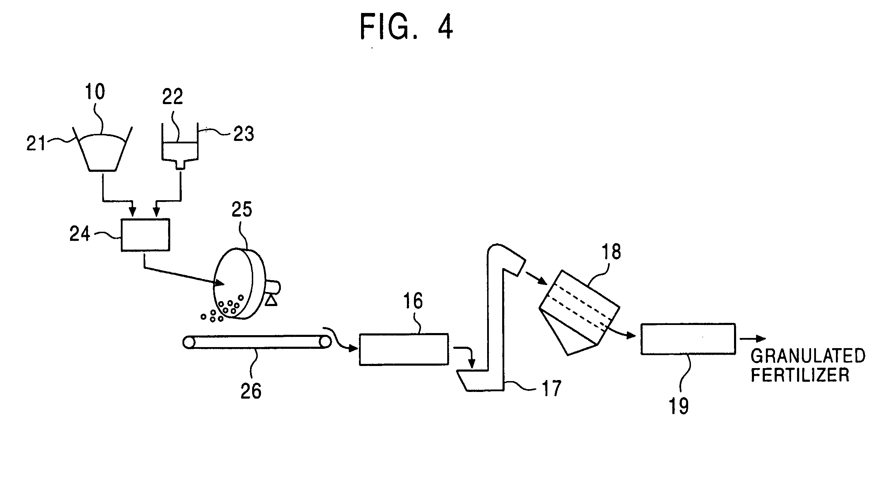

Fig. 4 shows another example of granulation step of the raw material for phosphate fertilizer. The pulverized slag 10 obtained by the above-described pulverizing treatment is charged to a hopper 21. The weighed pulverized slag 10 is charged to a mixer 24 from the hopper 21. A specific quantity of binder 14 stored in a vessel 23 is also charged to the mixer 24, where the pulverized slag 10 and the binder 14 are mixed together. The mixture is fed to a dish type granulator 25 to granulate the mixture therein. The slag granulated in the dish type granulator 25 is supplied to a belt conveyer 26 for undergoing drying in the drier 16 similar to the step of Fig. 3. Then, the slag is supplied to the sieve 18 by the elevator 17 to undergo sieving. Further the slag is cooled in the cooler 19 to become the granulated fertilizer.

The kind of binder applied to the granulation step has no specific limitation. Applicable binder may be one or combination of phosphate, clay, bentonite, polyvinylalcohol, carboxymethyl cellulose, polyacrylic acid, molasses, lignin, magnesium sulfate, and starch. From the point of granulation property and of collapsibility of fertilizer grains after applied, starch, magnesium sulfate, and lignin are suitable, and one or more of them is preferably used as the main components of the binder.

On manufacturing granulated fertilizer by granulating raw material for phosphate fertilizer, the required characteristics of binder include: ① to provide excellent granulation property; ② to provide ready collapse of fertilizer grains (granulated fertilizer) after applied to disperse into soil; ③ to provide sufficient hardness of grains not to collapse thereof during manufacturing and in the course of transportation before the application of the fertilizer; and ④ to give no bad influence of the binder components on the environment including soil. All the above-given starch, magnesium sulfate, and lignin satisfy these requirements. As of these, starch is particularly preferred because the starch provides particularly high hardness of the granulated fertilizer grains, and the starch dissolves in rain or water in soil to allow collapsing the granulated fertilizer grains at an adequate speed. With the addition of water, starch is impasted, and further the drying of the pasted starch generates solidified starch. Therefore, starch provides excellent granulation performance. Furthermore, starch is decomposed by microorganisms in soil, thus the starch does not give bad influence on plants and environment.

Applicable starch used as the binder includes the one manufactured from corn, tapioca, wheat, potato, and rice. These various starches differ in the percentages of components, or amylose (long straight chain of d-glucose molecules) and amylopectin (branched chain of d-glucose molecules), depending on the kind of raw material. Glutinous rice and glutinous corn contain large percentage of amylopectin. Furthermore, applicable kinds of starches may be raw starch or processed starch which is a starch processed by heat, acid, alkali, salt, or enzyme. Starches having property of pasting by themselves are suitable for the granulation binder independent of the kind thereof.

Preferable mean particle size of thus granulated phosphate fertilizer is in a range from 0.5 to 6 mm. The fertilizer having mean particle sizes of lower than 0.5 mm gives poor handling performance because those small particles are blown off by wind during application. The fertilizer having mean particle sizes exceeding 6 mm is difficult for uniform distribution on applying thereof. More preferable particle size range is from 1 to 5 mm.

A method for manufacturing raw material for fertilizer suitable for obtaining the raw material for phosphate fertilizer according to the present invention is described in the following.

To obtain a slag that satisfies the above-described compositions and conditions by the dephosphorization reaction treatment of molten iron, it is necessary to generate slag having high concentration of phosphate with very small quantity of charged $CaF_2$ or substantially without charge of $CaF_2$.

Furthermore, from the point of slug-manufacturing cost and of total treatment cost, the manufacturing method is necessary to be executed with a simple process as far as possible and at low cost without adding special step for concentrating the phosphate in the slag, (for example, the step of concentrating P in molten iron). Those kinds of requirements are satisfied by several novel manufacturing methods described below.

The first manufacturing method which is provided by the present invention is the one to conduct treatment on a molten iron that has sufficiently low level of Si concentration. According to the manufacturing method, high dephosphorization efficiency is attained even under a condition of minimum amount of charged $CaF_2$ or without charge of $CaF_2$, the quantity of generated $SiO_2$ is small, and the necessary amount of charging CaO source is small, thus the amount of generated slag is small. Consequently, the slag which has high concentration of phosphate and contain.s very small amount of fluorine is manufactured efficiently at low cost without adding special step.

The second and the third manufacturing methods which are provided by the present invention are the ones to conduct treatment by charging a CaO source and gas oxygen in respective specific configurations or under respective specific conditions. According to the manufacturing methods, high dephosphorization efficiency is attained even with a minimized quantity of charged $CaF_2$ or without charge of $CaF_2$, and the necessary amount of charged CaO source is small, thus the amount of generated slag is small. As a result, a slag which has high concentration of phosphate and contains very small amount of fluorine is efficiently manufactured at low cost without adding special step.

The first method for manufacturing raw material for phosphate fertilizer according to the present invention is described in the following.

The inventors of the present invention studied the methods which are able to manufacture a slag with high phosphate content at a high dephosphorization reaction efficiency through the treatment of dephosphorization reaction in molten iron, and found that high dephosphorization efficiency is attained with very small amount of charged $CaF_2$ or substantially without charge of $CaF_2$ by conducting the dephosphorization reaction treatment of charging a CaO source and an oxygen source to a molten iron containing 0.07 mass% or less $SiO_2$, preferably 0.05 mass% or less, more preferably 0.03 mass% or less, and that a raw material (slag) for phosphate fertilizer which contains very small amount of fluorine and has high concentration of phosphate is manufactured.

Consequently, according to the first manufacturing method of the present invention, the slag as the raw material for phosphate fertilizer is manufactured by applying dephosphorization reaction treatment by charging a CaO source and an oxygen source to a molten iron that contains 0.07 mass% or less $SiO_2$, preferably 0.05 mass% or less, and more preferably 0.03 mass% or less.

Furthermore, it was found that the raw material for phosphate fertilizer which is better in terms of phosphate concentration and the content of fluorine is stably manufactured owing to the optimization of the molten iron temperature at the beginning of the treatment and the molten iron temperature at the end of the treatment in the above-described dephosphorization reaction treatment of molten iron, and owing to further increase in the dephosphorization efficiency by the charge of the CaO source and the oxygen source under respective specific conditions.

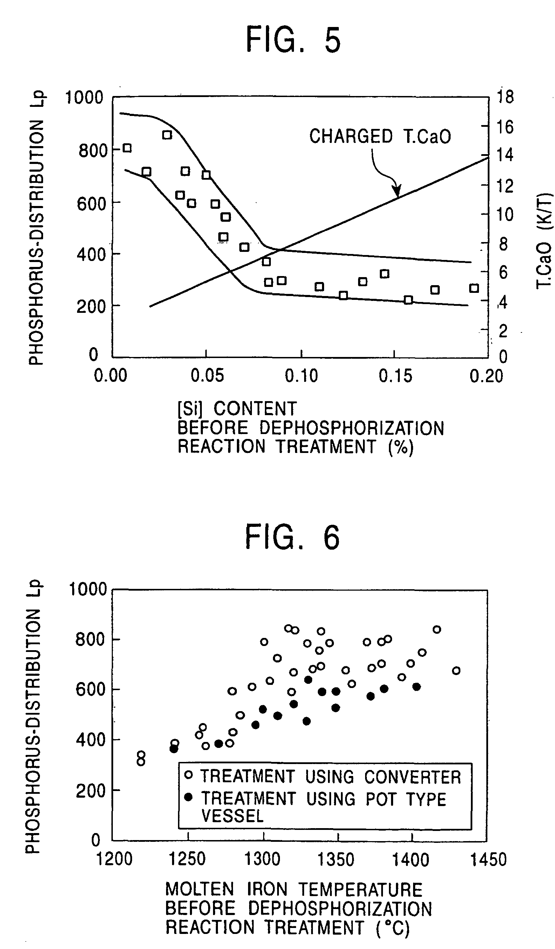

Fig. 5 is a graph showing the relation between the Si content in molten iron before the dephosphorization reaction treatment and the dephosphorization efficiency (phosphorus-distribution Lp) for the case that a molten iron which was subjected to desiliconization treatment to adjust the Si content in the molten iron using a converter type vessel, (under the conditions of 1280□C or higher molten iron temperature at the beginning of the treatment, 1280°C to 1360°C of molten iron temperature at the end of the treatment, and top-feed of quicklime). When the Si content in the molten iron being subjected to the dephosphorization reaction treatment becomes to 0.07 mass% or below, the increased basicity of the slag increases rapidly the phosphorus-distribution Lp,(Lp is an index of the dephosphorization efficiency; Lp = (mass% P) / [mass% P], where (mass% P) designates the P concentration in the slag, and [mass% P] designates the P concentration in the molten iron), and a significant increase in the dephosphorization efficiency appears. The dephosphorization efficiency increases with the decrease in the Si content in the molten iron, and the highest dephosphorization efficiency is attained at Si contents of about 0.03 mass% or below in the molten iron.

The dephosphorization reaction treatment at that high dephosphorization efficiency increases the phosphate concentration in the slag. The amount of generated slag becomes extremely small because of the low Si content of the molten iron before the dephosphorization reaction treatment and because of the small amount of charged CaO to adjust the basicity. Since the high dephosphorization efficiency is attained, the treatment is conducted with very small amount of charged CaF$_2$ or substantially without charge of CaF$_2$. Accordingly, a single treatment stage can manufacture a raw material (slag) for phosphate fertilizer containing very little amount of fluorine and having high concentration of phosphate without adding special step.

The concentration of phosphate in the slag generated in the dephosphorization reaction treatment of molten iron, described above, naturally differs with the P concentration in the molten iron before and after the treatment, with the amount of generated slag, or the like. Generally, however, the phosphate concentration in the slag is 7 mass% or more, (normally approximately 7 to 10 mass%). According to a method described later, in which the CaO source is ejected (sprayed) against the bath surface of the reaction treatment vessel from above the bath surface, and in which preferably the ratio of the charge rate of CaO source to the charge rate of oxygen source is regulated to a specific range, higher phosphate concentration, or generally 10 mass% or more (normally approximately 10 to 15 mass%), is attained.

On conducting dephosphorization reaction treatment, if the Si content of the molten iron exceeds the above-given upper limit (0.07 mass%, preferably 0.05 mass%, and more preferably 0.03 mass%), the dephosphorization reaction treatment is given after applying desiliconization treatment to decrease the Si content in the molten iron to not more than the upper limit. Generally, molten iron tapped from a blast furnace or the like contains Si to approximate level of from 0.30 to 0.50 mass%, and, for a molten iron containing that normal level of Si, the desiliconization treatment is essentially requested.

The desiliconization treatment may be given during the molten iron desiliconization step, (for example, desiliconization at casthouse), or during the desiliconization in a vessel. For the case of desiliconization in vessel, the vessel may be molten iron pot, ladle such as charge pot, torpedo, or the like. By charging a desiliconization agent to the vessel to agitate the contents, efficient desiliconization is performed. Applicable desiliconization agent includes solid oxygen source (normally iron oxide such as mill scale) , gas oxygen source (gas oxygen or oxygen-laid gas), or both of them.

The desiliconization treatment given in a ladle can fully agitate the molten iron owing to the shape thereof to hold the molten iron, thus giving better desiliconization efficiency than that attained in other molten iron desiliconization steps (for example, desiliconization step conducted in casthouse and in torpedo). Consequently, when the Si content in the tapped molten iron is relatively high, it is preferable to apply desiliconization treatment in the ladle or to apply desiliconization in the ladle after conducted the casthouse desiliconization. Conventionally-given casthouse desiliconization or the like gives poor desiliconization efficiency, and furthermore, that type of treatment uses only a solid oxygen source (mill scale or the like) as the desiliconization agent, thus there arises a problem of decreasing in the molten iron temperature. To the contrary, the desiliconization treatment given in a ladle is easy to maintain and stabilize the molten iron temperature because gas oxygen can be charged as the desiliconization agent, and is easy to adjust the molten iron temperature because the charge of solid oxygen source is also available.

The dephosphorization reaction treatment is conducted by charging a CaO source and an oxygen source to a molten iron containing Si at a level of 0.07 mass% or less, preferably 0.05 mass% or less, and most preferably 0.03 mass% or less. Normally the dephosphorization reaction treatment is conducted using a molten iron pot or a converter type vessel. The applied vessel, however, has no limitation, and in some cases, a single vessel may be used for successive application of desiliconization treatment and dephosphorization reaction treatment. In that case, the dephosphorization reaction treatment is given after removing at least a part of slag after the desiliconization treatment.

Although quicklime is generally used as the CaO source, the CaO source is not limited to quicklime. The CaO source and the solid oxygen source are charged to the treatment vessel by top-feed, injection, or other methods. As for the gas oxygen source, generally oxygen gas is blown into and/or sprayed to the molten iron using lance, bottom-blowing nozzle, or the like.

There is no specific limitation on the execution method and treatment condition of the dephosphorization reaction treatment. It is, however, preferable that the treatment is conducted under the conditions given below. Through the treatment conduced under the conditions, a slag containing small amount of fluorine and having high concentration of phosphate is more stably obtained.

(1) The molten iron temperature at the beginning of dephosphorization reaction treatment is controlled to 1280□C or above, (preferably 1320°C or above).

(2) The molten iron temperature at the end of dephosphorization reaction treatment is controlled to a range from 1280°C to 1360°C, (preferably from 1300°C to 1340°C).

(3) The CaO source and the oxygen source are charged against the surface of molten iron bath or into the molten iron bath at the same position with each other.

(4) An FeO-CaO-base solvent is charged as a part or total of the CaO source.

Regarding the condition of (1), the method of dephosphorization reaction treatment of a molten iron of low Si content increases the basicity of slag, (= CaO/SiO$_2$), to increase the melting temperature, which results in insufficient initial slag formation of CaO, thus likely inducing degradation in dephosphorization efficiency. To prevent that type of decrease in the dephosphorization efficiency, it is effective that the molten iron temperature at the beginning of the dephosphorization reaction treatment is set to a standard value or higher temperature to enhance the initial slag formation in initial period, thus generating the fused FeO in early stage. To do this, it is preferable that the molten iron temperature at the beginning of the dephosphorization reaction treatment is controlled to 1280°C or above, more preferably 1320°C or above.

Fig. 6 is a graph showing the relation between the molten iron temperature at the beginning of dephosphorization reaction treatment and the dephosphorization efficiency for the cases that the dephosphorization reaction treatment is conducted in a converter type vessel and that the treatment is conducted in a molten iron pot under the conditions of 1280°C to 1360°C of molten iron temperature at the end of dephosphorization reaction treatment, 0.07 mass% or less Si content in the molten iron before the dephosphorization reaction treatment, using the converter type vessel with top-feed of quicklime, and the molten iron pot with both the top-feed of quicklime and the inj ection of quicklime in a part. The figure shows that particularly high dephosphorization efficiency (phosphorus-distribution Lp) is attained by controlling the molten iron temperature at the beginning of the treatment to 1280°C or above, preferably 1320°C or above. According to the figure, the agitation efficiency is higher in the dephosphorization reaction treatment in the converter type vessel than that in the dephosphorization reaction treatment in the molten iron pot, so the former treatment gives higher dephosphorization efficiency in a limited treatment period. With that high dephosphorization efficiency and small amount of generated slag, the minimization of the amount of charged CaF$_2$ or without charge of CaF$_2$ is realized, and furthermore, the phosphate concentration in slag is effectively increased, thus the raw material (slag) for phosphate fertilizer having excellent fertilizer performance is stably manufactured.

As for the above-described condition (2), the dephosphorization efficiency of molten iron is favorable at relatively low molten iron temperatures from the equilibrium point of view. However, excessively low molten iron temperatures result in insufficient slag formation of CaO, thus the dephosphorization efficiency decreases. Since the treatment is actually conducted within a limited period of operation, the treatment temperature has an adequate range from the point of dephosphorization efficiency. The adequate temperature range is from 1280°C to 1360°C of the molten iron temperature at the end of the dephosphorization reaction treatment, more preferably from 1300°C to 1340°C. By completing the dephosphorization reaction treatment at that molten iron temperature range, better dephosphorization efficiency is secured.

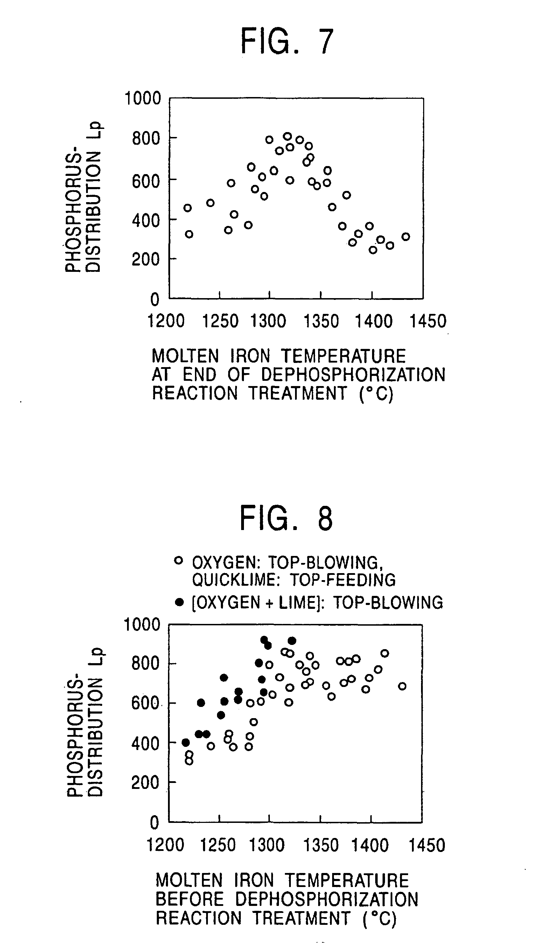

Fig. 7 is a graph showing the relation between the molten iron temperature at the end of dephosphorization reaction treatment and the dephosphorization efficiency for the case that the dephosphorization reaction treatment (charge of the CaO source is given by top-feed of quicklime) is conducted by a converter type vessel, (1280°C or more of the molten iron temperature at the beginning of dephosphorization reaction treatment, and 0.07 mass% or less of the Si content in the molten iron before ending the dephosphorization reaction treatment). The figure shows that particularly high dephosphorization efficiency (phosphorus-distribution Lp) is attained at molten iron temperatures at the end of the dephosphorization reaction treatment ranging from 1280°C to 1360°C, preferably from 1300°C to 1340°C. With that high dephosphorization efficiency and small amount of generated slag,. the minimization of the amount of charged CaF$_2$ or without charge of CaF$_2$ is realized, and furthermore, the phosphate concentration in slag is effectively increased, thus the raw material (slag) for phosphate fertilizer having excellent fertilizer performance is stably manufactured.

For the above-given condition (3), the slag formation by the reaction of [CaO + FeO] is enhanced by charging the CaO source and the oxygen source to the same position on the surface of bath or in the bath in the treatment vessel, or by simultaneously charging the CaO source to the point of FeO generation resulted from the oxygen source charging, thus the dephosphorization efficiency increases.

Fig. 8 is a graph showing the relation between the molten iron temperature at the beginning of dephosphorization reaction treatment and the dephosphorization efficiency in the dephosphorization reaction treatment using a converter type vessel, (1280°C to 1360°C of the molten iron temperature at the end of dephosphorization reaction treatment, and 0.07 mass% or less of the Si content in the molten iron before the dephosphorization reaction treatment), for two cases: charging the CaO source and the oxygen source to separate positions on the surface of bath or in the bath in the vessel, (top-feeding for the quicklime and top-blowing for the gas oxygen); and charging the CaO source and the oxygen source to the same position on the surface of bath or in the bath in the vessel, (top-blowing for [quicklime + oxygen gas]). According to Fig. 8, the case of charging the CaO source and the oxygen source to the same position on the surface of bath or in the bath in the vessel provides superior dephosphorization efficiency (phosphorus-distribution Lp) to the case of charging the CaO source and the oxygen source to separate positions on the surface of bath or in the bath in the vessel. With that high dephosphorization efficiency and small amount of generated slag, the minimization of the amount of charged $CaF_2$ or without charge of $CaF_2$ is realized, and furthermore, the phosphate concentration in slag is effectively increased, thus the raw material (slag) for phosphate fertilizer having excellent fertilizer performance is stably manufactured.

As for the above-described condition (4), use of an Fe-O-CaO-base solvent which contains CaO and a solid oxygen source, as a part or the total of the CaO source, provides equivalent function and effect with the case of above-described (3) in which the CaO source and the oxygen source are charged to the same position on the surface of bath or in the bath in the vessel. Examples of applicable FeO-CaO-base solvent are calcium ferrite and sinter of mixture of calcia and ferrite.

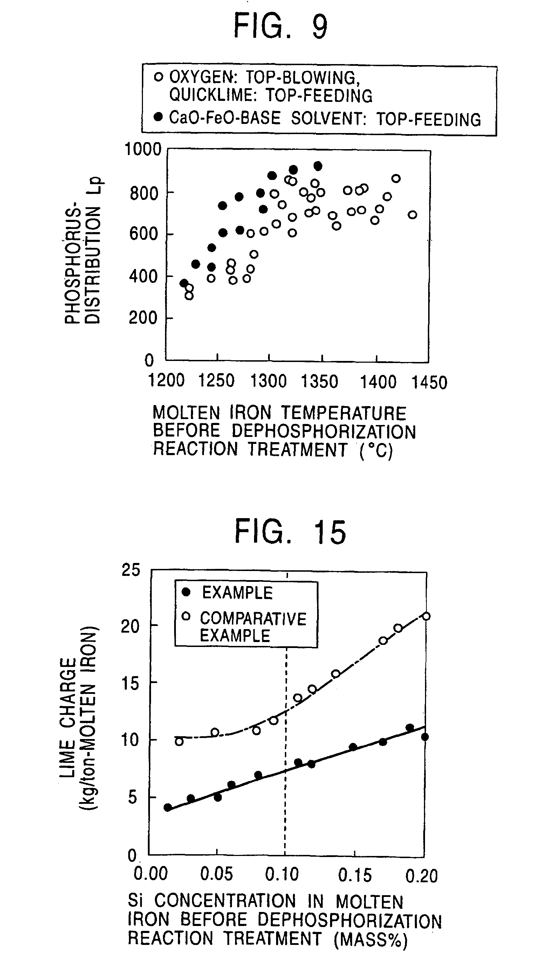

Fig. 9 is a graph showing the relation between the molten iron temperature at the beginning of dephosphorization reaction treatment and the dephosphorization efficiency in the dephosphorization reaction treatment using a converter type vessel, (1280°C to 1360°C of the molten iron temperature at the end of dephosphorization reaction treatment, and 0.07 mass% or less of the Si content in the molten iron before the dephosphorization reaction treatment), for two cases: for the case that quick lime is used as the CaO source and that the CaO source and the oxygen source are charged against the surface of bath or into the bath in the vessel at separate positions from each other, (top-feed for the quicklime, and top-blowing for the gas oxygen), and for the case that an FeO-CaO-base solvent, (a mixed sinter of FeO + CaO), is used as the CaO source, (top-feed for the solvent, and top-blow for the oxygen gas). According to Fig. 9, the case of charging the FeO-CaO-base solvent as the CaO source provides superior dephosphorization efficiency (phosphorus-distribution Lp) to the case of charging the CaO source and the oxygen source to separate positions on the surface of bath or in the bath in the vessel. With that high dephosphorization efficiency and small amount of generated slag, the minimization of the amount of charged $CaF_2$ or without charge of $CaF_2$ is realized, and furthermore, the phosphate concentration in slag is effectively increased, thus the raw material (slag) for phosphate fertilizer having excellent fertilizer performance is stably manufactured.

As shown in Fig. 6, the dephosphorization reaction treatment provides particularly strong effect (dephosphorization efficiency) by using a converter type vessel. The reason of attaining that strong effect is that the converter type vessel has larger freeboard than that of ladle and torpedo, which allows the vessel to adopt high driving power, thus inducing quick slag formation and P mass transfer.

In general practice of dephosphorization reaction treatment in a converter type vessel, oxygen is top-blown via a top-blowing lance or the like after charged the molten iron, while charging a specified amount of calcined lime or the like as the CaO source to generate slag consisting mainly of CaO, $SiO_2$, FeO, and the like.

In the manufacturing method according to the present invention, described above, the dephosphorization efficiency is further increased by charging the CaO source in a specific configuration, preferably by charging the CaO source and the oxygen source in respective specific configurations. Through the specific charge mode of CaO source and oxygen source, the phosphate concentration in the slag is further increased under a condition of minimum charge of $CaF_2$ or without charge of $CaF_2$.

As for the specific charge mode of CaO source and oxygen source, at least a part of the CaO source being charged to the treatment vessel holding molten iron, (molten iron pot, converter type vessel, and the like), is charged to the vessel by ejecting (spraying) against the surface of bath from above the bath in the treatment vessel using a carrier gas. Preferably the charge rate B (kg/min/ton-molten iron) of the CaO source being blown against the surface of bath using the carrier gas, converted to CaO, in relation to the charge rate A ($Nm^3$/min/ton-molten iron) of the oxygen source being charged to the vessel, converted to oxygen gas, is controlled to satisfy [$0.3 \leqq A/B \leqq 7$].

That type of charge mode of CaO source and oxygen source is to charge the CaO source at a rate corresponding to the amount of FeO generated in the slag resulted by the oxygen charge. With the charge mode, the dephosphorization efficiency is further increased. That is, when the value of A/B is less than 0.3, the charged CaO becomes excessive to the charged oxygen, which results in small amount of FeO generated in the slag so that the CaO is left in the slag as solid, which solid CaO fails to effectively function in the dephosphorization reaction. When the value of A/B exceeds 7, the quantity of CaO necessary in the dephosphorization reaction relative to the oxygen charge becomes short. Therefore, both of the above-given outside range cases are not preferable in view of enriching the phosphate in the slag.

The effect of optimization of the charge rate ratio of oxygen to CaO source, which is described above, strongly depends on the method of charging the CaO source. That is, the CaO source which is charged to satisfy the above-given charge rate ratio is the CaO source which is blown against the surface of bath from above the bath in the vessel using a carrier gas. With that type of charge, the effect of optimization of the charge rate ratio of oxygen to CaO source is attained. The reason of attaining the optimization effect is that, since the FeO which is generated from oxygen charged to the vessel and the phosphorus oxide (phosphorus oxide generated by the reaction of oxygen with [P] in the metal) exist mainly on the surface of metal bath, the CaO source is charged against the surface of metal bath to let the CaO present in the vicinity of phosphorus oxide to effectively enhance the dephosphorization reaction.

Therefore, most preferably the entire CaO source being charged to the vessel is blown against the surface of bath from above the bath in the vessel using a carrier gas. In addition, it is preferable that at least about one third of the CaO source being charged to the vessel is blown against the surface of bath from above the bath in the vessel using a carrier gas.

Generally, top-blowing lance is adopted to blow the CaO source against the surface of bath from above the bath in the vessel using a carrier gas. The carrier gas is normally nitrogen gas, inert gas, or gas oxygen (pure oxygen gas or oxygen-laid gas).

The oxygen source being charged to the vessel may be gas oxygen source or solid oxygen source, or may be combination thereof. The gas oxygen source may be pure oxygen or oxygen-laid gas. The solid oxygen may be iron oxide and mill scale. There is no specific limitation of the method for charging oxygen source. For the case of gas oxygen, arbitrary method is applicable, including top blowing via a lance, inj ection into the molten iron, and bottom blowing. For the case of solid oxygen source, arbitrary method is applicable, including injection and top-feed. When gas oxygen charge is applied, if the dephosphorization reaction treatment is carried out using a converter type vessel, a molten iron pot, or the like, generally top blowing via a lance is done, and if the dephosphorization treatment is conducted using a torpedo, generally injection into the molten iron using a lance is applied.

To attain most effectively the effect of dephosphorization reaction treatment, however, it is preferable to use a gas oxygen (pure oxygen gas or oxygen-laid gas), which becomes at least a part of the oxygen source, as the carrier gas for blowing the CaO source against the surface of bath. In that case, the gas oxygen is top-blown against the surface of bath together with the CaO source. With that type of method, the contact efficiency between CaO and FeO on the surface of the metal increases, which further enhances the dephosphorization reaction.

For attaining more improved dephosphorization reaction efficiency, the molten iron is preferably agitated by gas. The gas agitation is conducted by blowing an inert gas such as nitrogen gas and argon gas into the molten iron via, for example, an inj ection lance or a bottom-blowing nozzle. To secure sufficient bath agitation, the charge rate of the agitation gas is set to $0.02 \, \text{Nm}^3/\text{min/ton-molten iron}$ or more. Since, however, excess agitation excessively increases the rate of reduction of generated FeO by the C in the molten iron, the charge rate of the agitation gas is preferably $0.3 \, \text{Nm}^3/\text{min/ton-molten iron}$ or below.

Through the above-described dephosphorization reaction treatment in which the CaO source, preferably the CaO source and the oxygen source, are charged in respective specific configurations, the dephosphorization efficiency is further increased with minimum quantity of charged $CaF_2$ or without charge of $CaF_2$. As a result, the phosphate concentration in slag is further increased to stably manufacture the raw material (slag) for phosphate fertilizer having excellent fertilizer characteristics. With the dephosphorization reaction treatment, generally slag with 10 mass% or higher (normally about 10 to 15 mass%) phosphate concentration is obtained.

Following is the description of the second method for manufacturing the raw material for phosphate fertilizer according to the present invention.

The inventors of the present invention conducted various experiments and investigations using a converter type vessel to find a method for manufacturing slag having high concentration of phosphate at a high dephosphorization reaction efficiency by the dephosphorization reaction treatment of molten iron without using $CaF_2$. As described before, $CaF_2$ plays an important role to secure the fusing property of slag. Also in the experiments of the inventors of the present invention, it was confirmed that, for the case of without charge of $CaF_2$ or for the case of small charged quantity of $CaF_2$, the charged CaO source showed apparently no slag-formation, and the dephosphorization reaction efficiency was decreased. Through the repeated experiments, however, it was confirmed that the dephosphorization reaction significantly varies with the charge rate of oxygen and the charge rate of CaO, specifically that, although FeO is generated in the slag by charging oxygen, there is an adequate charge rate of CaO corresponding to the generation rate of FeO. If the charge rate of oxygen in relation to the ratio of charge rate of oxygen to the charge rate of CaO is excessively small, the FeO quantity generated in the slag becomes small, and the CaO is left as solid behind to fail in effectively functioning in the dephosphorization reaction. If the charge rate of oxygen is excessively large, the quantity of CaO necessary in the dephosphorization reaction in relation to the charge rate of oxygen becomes insufficient. For both cases, the dephosphorization reaction rate decreases.

As described above, it was found that there is an optimum charge rate ratio of oxygen to CaO for efficiently dephosphorizing molten iron. Furthermore, it was found that the effect of optimization of charge rate ratio of oxygen to CaO significantly depends on the charge method of CaO. That is, the dephosphorization reaction proceeds by generating a phosphorus oxide ($P_2O_5$) through the oxidation of [P] in molten iron either directly by the oxygen (gas oxygen or solid oxygen source) charged to the vessel or via FeO. Since the phosphorus oxide is instable in kinetics, the phosphorus oxide binds with CaO to form $3CaO \cdot P_2O_5$ or $4CaO \cdot P_2O_5$, thus the dephosphorization reaction further proceeds. Accordingly, how the CaO exists efficiently in the vicinity of generated phosphorus oxide is an important variable to efficiently progress the dephosphorization reaction. Since the FeO and the phosphorus oxide generated by the charged oxygen exist mainly on the surface of molten iron bath, it is important to charge the CaO source to that domain. In addition, when the gas oxygen is blown against the surface of molten iron bath via a top-blowing lance, the gas oxygen collided the surface of bath induces large amount of FeO, which creates a highly advantageous condition for enhancing the slag formation of CaO. With that point of view, it was found that highly effective means to enhance the dephosphorization reaction is to blow the gas oxygen against the surface of molten iron bath via a top-blowing lance, and to blow at least a part of the CaO source against the surface of molten iron bath via a top-blowing lance, preferably to blow at least .a part of the CaO source to the area on the molten iron bath surface where the gas oxygen is blown thereagainst, (or the FeO-generating area).

According to the second manufacturing method of the present invention, therefore, the CaO source and the oxygen source are charged to the vessel holding the molten iron to induce the dephosphorization reaction in the molten iron, and the slag which is generated by the dephosphorization reaction and which contains phosphate is collected as the raw material for phosphate fertilizer, wherein at least a part of the gas oxygen and of the CaO source is blown against the surface of molten iron bath via a top-blowing lance to induce dephosphorization reaction in the molten iron, and the charge rate B (kg/min/ton-molten iron) of the CaO source blown against the surface of molten iron bath, converted to CaO, satisfies the formula (3) in relation to the charge rate A ($Nm^3$/min/ton-molten iron) of the oxygen source charged into the vessel, converted to gas oxygen. Thus, high dephosphorization efficiency is attained and the quantity of charged smelting agent is decreased with very small quantity of charged $CaF_2$ or substantially without charge of $CaF_2$. As a result, a single treatment. stage can manufacture a raw material (slag) for phosphate fertilizer containing very small amount of fluorine and having high concentration of phosphate without adding special step.

$$0.3 \leqq A/B \leqq 7 \qquad (3)$$

To attain higher dephosphorization reaction efficiency, it is preferable to apply treatment where the above-described charge rate B (kg/min/ton-molten iron) of the CaO source, converted to CaO, and the above-described charge rate A ($Nm^3$/min/ton-molten iron) of the oxygen source, converted to gas oxygen, satisfy the formula (4).

$$1.2 \leqq A/B \leqq 2.5 \qquad (4)$$

The concentration of phosphate in the slag generated in the above-described dephosphorization reaction treatment of molten iron naturally differs with the P concentration in the molten iron before and after the treatment and with the amount of generated slag. Generally, however, the phosphate concentration in the slag is 7 mass% or more, (normally approximately 7 to 10 mass%). In the treatment under a specifically preferred condition provides 10 mass% or higher, (normally 10 to 15 mass%), phosphate concentration.

To increase the dephosphorization reaction efficiency above-described, it is important to charge CaO at a rate corresponding to the quantity of FeO generated by the oxygen charge in the slag. If the balance therebetween is lost, the dephosphorization rate decreases.

That is, if the above-given A/B value is below 0.3, the CaO charge rate is excessive to the oxygen charge rate so that the amount of FeO generated in the slag becomes small, thus the CaO is left as solid in the slag to fail in effectively functioning in dephosphorization, which decreases the dephosphorization reaction rate. If the A/B value exceeds 7, the CaO amount necessary for dephosphorization is insufficient relative to the oxygen charge, thus also decreases the dephosphorization reaction rate.

By controlling the A/B value to a range from 1.2 to 2.5, the balance between the FeO generation rate by the oxygen charge and the CaO charge rate is optimized to provide particularly high dephosphorization reaction efficiency.

The effect of optimization of charge rate of oxygen and of CaO source according to the present invention strongly depends on the charge method of CaO source. That is, according to the present invention, the CaO source which is charged to satisfy the formula (3) , preferably the formula (4), is the CaO source which is blown against the surface of molten iron bath from above the bath in the vessel via a top-blowing lance using a carrier gas. With that CaO source, the effect of optimized charge rate ratio of oxygen to CaO source is attained. The reason of attaining the optimization effect is that, since the FeO which is generated from oxygen charged to the vessel and the phosphorus oxide (phosphorus oxide generated by the reaction of oxygen with [P] in the metal) exist mainly on the surface of metal bath, the CaO source is charged onto the surface of metal bath to let the CaO present in the vicinity of phosphorus oxide to effectively enhance the dephosphorization reaction.

According to the present invention, the gas oxygen is blown against the surface of molten iron bath via a top blowing lance. When the gas oxygen is charged in that manner, large quantity of FeO is generated by the gas oxygen collided the surface of molten iron bath, which creates a highly advantageous condition for enhancing the slag formation of CaO. By directly charging the CaO source to the area where the large amount of FeO is generated via a top-blowing lance, the slag-formation of CaO is effectively enhanced.

Blowing the gas oxygen and the CaO source against the surface of molten iron bath via a top-blowing lance may be done using a carrier gas other than gas oxygen, (for example, inert gas such as $N_2$ and Ar). Even for that case, it is preferable that a part or entire CaO source is blown against the area on the surface of molten iron bath where the gas oxygen is charged (sprayed) This is because the area on the surface of molten iron bath where the gas oxygen is charged is the area of FeO generation caused by the oxygen charge, and because the direct charge of CaO to that area on the surface of bath effectively enhances the slag-formation of CaO and increases the contact efficiency of CaO with FeO, thus significantly increases the dephosphorization reaction efficiency. As of the area on the surface of molten iron bath where the gas oxygen is charged, the CaO source is most preferably charged to a domain called the "flash point" which appears by the top-blowing of gas oxygen. The flash point is a domain on the surface of molten iron bath where the highest temperature appears resulted by the collision of gas jet of gas oxygen, and where the oxygen reaction by the gas oxygen concentrates and the place of strong agitation by the gas jet of gas oxygen is attained. Therefore, the flash point is a domain where the effect of CaO charge is most significantly attained. In this means, a preferred carrier gas for blowing the CaO source against the surface of molten iron bath is gas oxygen. In that case, the gas oxygen is blown against the surface of molten iron bath together with the CaO source, which means the direct charge of CaO source to the flash point. As a result, the contact efficiency between CaO and FeO on the surface of molten iron bath becomes highest, and the dephosphorization reaction is significantly enhanced.

According to the method of the present invention, there is no specific limitation of the method for blowing the gas oxygen and the CaO source against the surface of molten iron bath using a top-blowing lance. An example of the method is the one in which only a part of the lance holes among plurality thereof on the top-blowing lance is used for gas oxygen blowing, while other lance holes are used for blowing the CaO source using a carrier gas such as gas oxygen or a gas other than gas oxygen, (for example, inert gas such as nitrogen gas and argon gas) to charge thereof separately from each other to the surface of molten iron bath. In this case, it is particularly preferable that the applied top-blowing lance has the main lance hole at the center of the lance tip and has auxiliary lance holes surrounding the main lance hole, and that the gas oxygen is blown from the auxiliary lance holes, while the CaO source is blown from the main lance hole using a carrier gas of gas oxygen or above-described gas other than the gas oxygen to charge both of them against the surface of molten iron bath. Alternatively, the gas oxygen blowing and the CaO source blowing using a carrier gas of gas oxygen or above-described gas other than the gas oxygen may be given using different top-blowing lances from each other. For both cases, however, it is preferable that the carrier gas for the CaO source is gas oxygen for most efficiently conducting slag-formation of CaO, as described above.

The vessel for carrying out the present invention is most preferably a converter type vessel from the point of sufficiently securing the freeboard. Nevertheless, there is no specific limitation of the vessel, and any type of vessel other than the converter type vessel may be applied if only the vessel has a function of allowing the CaO source to be blown against the surface of molten iron bath. For example, arbitrary vessel such as molten iron pot and torpedo can be applied.

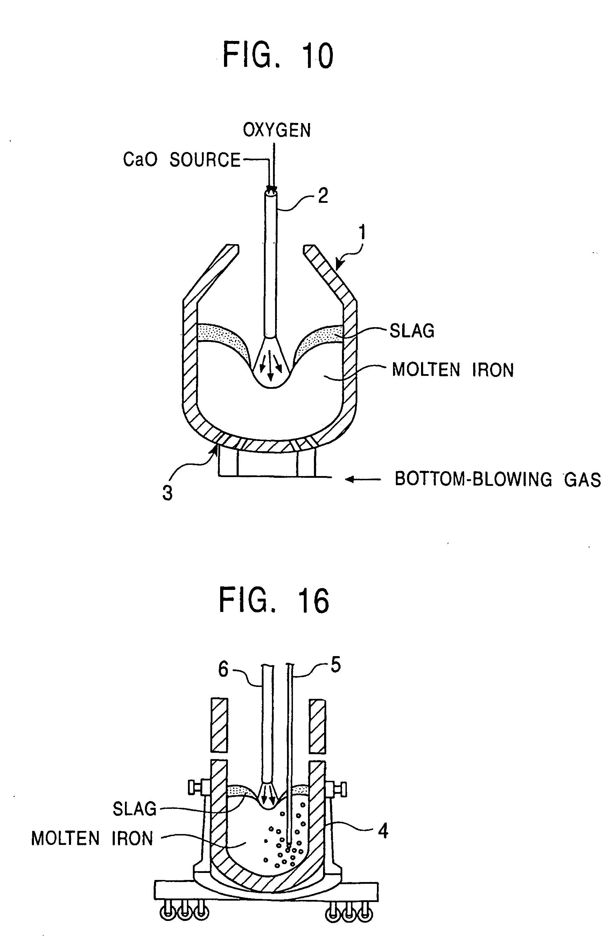

Figure 10 illustrates an example of the modes for carrying out the method according to the present invention using a converter type vessel, showing a converter type vessel 1, a top-blowing lance 2, and a bottom-blowing nozzle 3 located at the bottom section of the vessel. According to the example, the CaO source is blown against the surface of molten iron bath via the top-blowing lance 2 using gas oxygen as the carrier gas, while an agitation gas is blown into the molten iron via the bottom-blowing nozzle 3.

The effect of the present invention differs with the Si concentration in the molten iron before the dephosphorization reaction treatment. When the method according to the present invention is applied to the molten iron containing 0.10 mass% Si before the dephosphorization reaction treatment, particularly high dephosphorization reaction efficiency is attained.

When the Si concentration in the molten iron before the dephosphorization reaction treatment is high, the amount of generated $SiO_2$ increases, the amount of CaO for adjusting basicity increases, and the amount of generated slag increases. Consequently, the amount of Si is preferred to be decreased. Generally, high Si concentration in the molten iron before the dephosphorization reaction treatment leads to the increase in the amount of generated $SiO_2$, which increases not only the slag amount but also the CaO amount for adjusting the basicity. Therefore, from that point of view, less Si concentration in the molten iron before the dephosphorization reaction treatment is more preferable. On the other hand, low Si concentration in the molten iron before the dephosphorization reaction treatment decreases the $SiO_2$ concentration in the slag, which further degrades the fusing property of CaO to decrease the dephosphorization reaction efficiency. Nevertheless, the method according to the present invention shows significant increase in the dephosphorization reaction efficiency at lower Si concentration in the molten iron before the dephosphorization reaction treatment, (preferably 0.10 mass% or less). A presumable reason of the phenomenon is that the method according to the present invention adopts the blowing of a powder as the CaO source against the surface of bath, thus enhancing the fusion property of CaO by FeO even under the absence of $SiO_2$, which should increase the efficiency of CaO contribution to the dephosphorization reaction. With that type of dephosphorization reaction treatment of molten iron with that low Si concentration, the amount of generated slag is decreased owing to the reason described above in the first manufacturing method. With that high dephosphorization efficiency and small amount of generated slag, the minimization of the amount of charged $CaF_2$ or without charge of $CaF_2$ is realized, and furthermore, the phosphate concentration in slag is effectively increased, thus the raw material (slag) for phosphate fertilizer having excellent fertilizer performance is stably manufactured.

As described above, the manufacturing method according to the present invention provides particularly strong effect under the application thereof to a molten iron containing 0.10 mass% or less Si. Therefore, the dephosphorization reaction treatment is preferably given to a molten iron containing 0.10 mass% or less Si. When the Si concentration in the molten iron produced in blast furnace or the like is 0.10 mass% or below, the molten iron may be subjected to dephosphorization reaction treatment without receiving desiliconization treatment described below. If the Si concentration in the molten iron produced in blast furnace or the like exceeds 0.10 mass%, the desiliconization treatment is given in a blast furnace casthouse, a molten iron pot, or the like to adjust the Si concentration in the molten iron before the dephosphorization reaction treatment. The detail of the desiliconization treatment is described before.

Lower molten iron temperature is more preferable for dephosphorization reaction. Also in the method according to the present invention, efficient treatment can be given normally at the treatment end temperatures of approximately from 1280°C to 1360°C. On the other hand, at low molten iron temperatures after the dephosphorization reaction treatment, a problem of thermal margin in succeeding process arises. To this point, since the method according to the present invention provides high dephosphorization reaction efficiency even at relatively high temperatures of dephosphorization reaction treatment, the molten iron temperature at the end of the dephosphorization reaction treatment can reach 1360°C or above, which level is difficult to attain in conventional technologies. In particular, as described below, the treatment of molten iron having low Si concentration under a condition of very small amount of $CaF_2$ charge or a condition of without charge of $CaF_2$ attains high temperature treatment up to about 1450°C. Consequently, according to the manufacturing method of the present invention, the treatment giving high dephosphorization reaction efficiency is available at the molten iron temperature at the end of the treatment not only in the above-given range from 1280°C to 1360°C, but also in a higher temperature range from 1360°C to 1450°C.

Since the dephosphorization reaction is a P oxidation reaction, common understanding in the past is that lower temperature of molten iron is more advantageous, and that a treatment at high molten iron temperatures induces transfer of phosphorus from slag to metal. Accordingly, conventionally it was considered that the treatment at high temperature region above 1360°C was difficult. To this point, in the above-described method according to the present invention for charging gas oxygen and CaO source, the inventors of the present invention found that, through the treatment conducted at high temperatures under the conditions of decreased Si concentration in the molten iron being subjected to the dephosphorization reaction treatment to relatively increase the slag basicity, and of decreased charged amount of $CaF_2$ or of without charge of $CaF_2$, the slag composition comes close to $3CaO \cdot P_2O_5$ in which the dephosphorized product becomes solid, so there occurs very little transfer of phosphorus from slag to metal, thus attaining high dephosphorization reaction efficiency even in high temperature treatment. It was also found that, in the case of the method in which the gas oxygen is blown against the surface of molten iron bath via a top-blowing lance, and the CaO source is blown to the area on the surface of molten iron bath, (more preferably to the flash point), where the gas oxygen is blown, the time between the lime fusion and the start of reaction between the lime and the phosphate compound becomes short, (or the reaction rate increases), and the phosphorus transfer rate becomes smaller, which is particularly advantageous.

According to the preferred manufacturing method, the treatment is conducted under the condition of 1 kg/ton-molten iron or less of $CaF_2$ charge, or substantially without charge of $CaF_2$ to a molten iron containing 0.10 mass% or less Si. As a result, high dephosphorization effect is attained even when the molten iron temperature at the end of the treatment is as high as 1360°C to 1450°C.

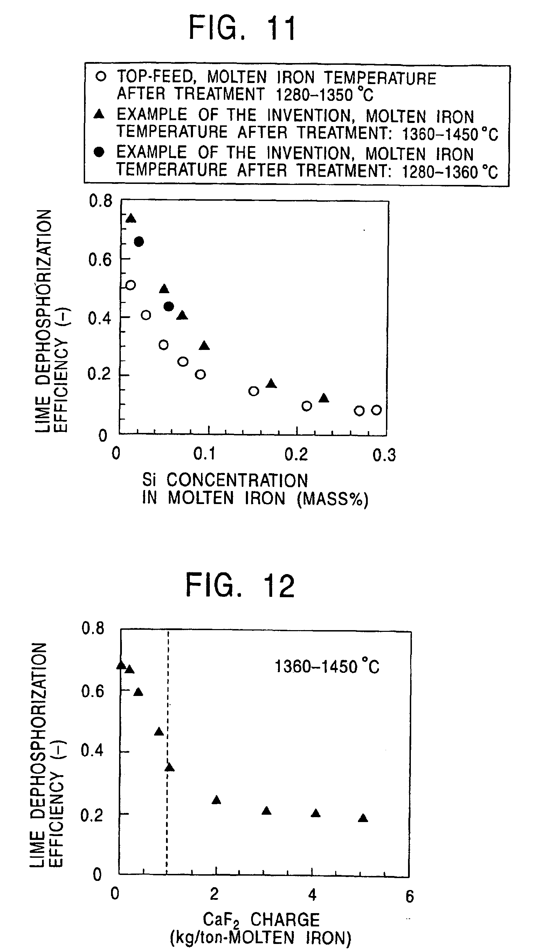

Fig. 11 shows the influence of the molten iron temperature (the molten iron temperature at the end of the dephosphorization treatment) and the Si concentration in the molten iron before the dephosphorization reaction treatment on the dephosphorization efficiency (lime dephosphorization efficiency), when the dephosphorization reaction treatment is conducted in a converter type vessel (300 ton) under the condition of without charge of $CaF_2$. The lime dephosphorization efficiency given in Fig. 11 designates the fraction of lime which contributed to the dephosphorization reaction to the total quantity of lime (calcined lime) charged as the CaO source, and the lime dephosphorization efficiency is calculated from stoichiometric ratio based on the presumption that the phosphorus oxide is fixed in a form of $3CaO \cdot P_2O_5$.

The tests were conducted by desiliconizing a blast furnace molten iron, at need, in casthouse and in molten iron pot, then by desulfurizing the molten iron in molten iron pot, followed by dephosphorizing the molten iron after transferred thereof to a converter type vessel. For each test, the Si concentration in the molten iron and the temperature of molten iron being subjected to dephosphorization treatment were varied.

The applied CaO source in the tests was solely a calcined lime consisting mainly of CaO, free from $CaF_2$.

The oxygen source was mainly oxygen gas, which was charged to the molten iron by blowing thereof against the surface of molten iron bath via a top-blowing lance, while some tests adopted simultaneous charge of solid oxygen source (iron ore). The quantity of oxygen other than for desiliconization was controlled to a range from 10 to 11 $Nm^3$/ton-molten iron. The period of dephosphorization reaction treatment was in a range from 10 to 11 minutes. The molten iron temperature after the dephosphorization reaction treatment was controlled by adjusting the molten iron temperature before the dephosphorization reaction treatment and the charge amount of scrap. In Fig. 11, the mark ○ designates the test example in which the CaO source was charged by top-feed, and the molten iron temperature at the end of the dephosphorization reaction treatment was controlled to a range from 1280□C to 1350□C; the mark ▲ designates the test example according to the method of the present invention, where the molten iron temperature at the end of the dephosphorization reaction treatment was controlled to a range from 1360°C to 1450°C, (CaO source was charged by blowing against the surface of molten iron bath); and the mark ● designates the test example according to the method of the present invention, where the molten iron temperature at the end of the dephosphorization reaction treatment was controlled to a range of not less than 1280°C and below 1360°C, (CaO source was charged by blowing against the surface of molten iron bath). The charged quantity of CaO source was varied in a range from 5 to 30 kg/ton-molten iron responding to the Si concentration in the molten iron.

According to Fig. 11, the fraction of CaO consumed to form $2CaO \cdot SiO_2$ decreases with the decrease of Si concentration in molten iron, thus the lime dephosphorization efficiency increases independent of the molten iron temperature at the end of the dephosphorization reaction treatment. On the other hand, in a domain where the Si concentration in the molten iron is 0.10 mass% or less, the lime dephosphorization efficiency becomes higher in the case of the method according to the present invention with the molten iron temperature at the end of the dephosphorization reaction treatment in a range from 1360°C to 1450°C than in the case of the method.of charging the CaO source by top-feed and of controlling the molten iron temperature at the end of the dephosphorization reaction treatment in a range from 1260°C to 1350°C. The lime dephosphorization efficiency for the case of the method according to the present invention with that high temperature of treatment-end point is almost equal to that in the case of the method according to the present invention with the treatment-end temperatures from 1280°C to 1360°C. The finding shows that the method according to the present invention provides high dephosphorization efficiency even in high temperature treatment. In equilibrium point of view, lower temperatures are more advantageous for the dephosphorization reaction. To this point, the result given in Fig. 11 presumably came from the decrease in the phosphorus transfer rate caused by the slag fusing property, the fixation of dephosphorized product, and the like.

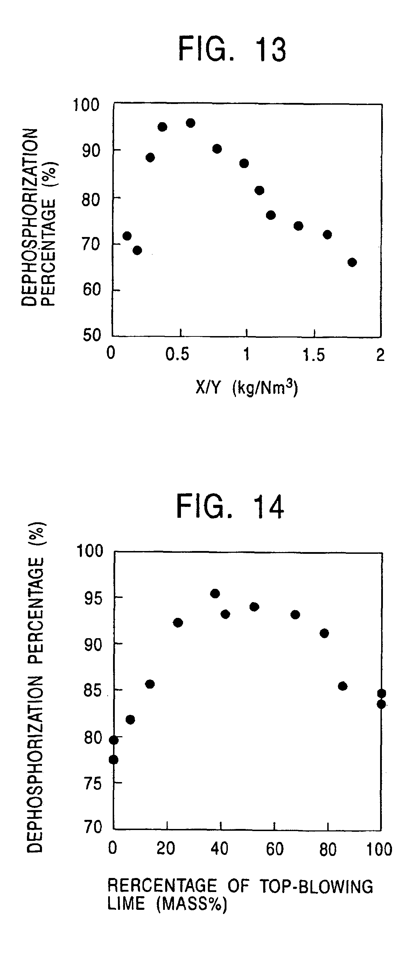

Fig. 12 shows the influence of the charged amount of $CaF_2$ on the dephosphorization efficiency (lime dephosphorization efficiency) in the method of high temperature treatment according to the present invention. The converter type vessel similar with that in the test of Fig. 11 was used. The charge mode and charge amount of CaO source and oxygen source, and the treatment period were similar with those of the test examples ▲ in Fig. 11. The molten iron temperature at the end of the dephosphorization reaction treatment was controlled to a range from 1360°C to 1450°C. The entire $CaF_2$ was charged by top-feed during the initial period of the treatment.

According to Fig. 12, the lime dephosphorization efficiency increases when the charge amount of $CaF_2$ becomes 1 kg/ton-molten iron or less. Since $CaF_2$ enhances the fusion of CaO, the charge of $CaF_2$ increases the percentage of liquid phase of slag. If, however, the treatment temperature (molten iron temperature) becomes 1360°C or above, it is presumed that the charge of $CaF_2$ to increase the liquid phase percentage of slag increases the transfer rate of phosphorus from slag to metal to readily reach the equilibrium level thereof, thus the lime dephosphorization efficiency decreases. Accordingly, to increase the dephosphorization efficiency at treatment temperatures (molten iron temperatures) of 1360°C or above, it is preferable to minimize the charge amount of $CaF_2$ (1 kg/ton-molten iron or less, or substantially without charge thereof).

If the molten iron temperature at the end of the dephosphorization reaction treatment exceeds 1450°C, the effect of increase in the P concentration in the molten iron in equilibrium with slag becomes more significant than the effect of CaO fusion by bringing the molten iron to high temperatures. Consequently, the molten iron temperature at the end of dephosphorization reaction treatment is necessary to be controlled to 1450°C or below.

The above-described results show that the high dephosphorization efficiency is attained even at the molten iron temperature at the end of the dephosphorization reaction treatment of from 1360°C to 1450°C by applying the treatment in the method according to the present invention to a molten iron containing 0.10 mass% or less Si under the condition of charge amount of $CaF_2$ at 1 kg/ton-molten iron or less, or substantially without charge of $CaF_2$.

Through the dephosphorization reaction treatment with that high dephosphorization efficiency, the phosphate concentration in slag further increases: Furthermore, since the Si content in the molten iron before the dephosphorization reaction treatment is small, the generated $SiO_2$ amount is small, and the charged amount of CaO for adjusting the basicity is also small, thus the generated slag amount becomes very small. With that high dephosphorization efficiency, the treatment can be conducted with very small amount of charged $CaF_2$ or without charge of $CaF_2$. As a result, the raw material (slag) for phosphate fertilizer containing very small amount of fluorine and having very high phosphate concentration is manufactured.

Generally, the molten iron temperature before the dephosphorization reaction treatment is approximately 1250°C to 1350°C. Regarding the method for adjusting the molten iron temperature at the end of the dephosphorization reaction treatment, a method to control the charge amount of scrap is normally applied to the case of dephosphorization reaction treatment using a converter type vessel to melt scrap therein, and a method to adjust the charge amount of solid oxygen source such as sintered powder is normally applied to the case of dephosphorization reaction treatment using a pot type vessel such as molten iron pot and a torpedo car. With those types of method, the molten iron temperature at the end of the treatment may be adjusted to a range from 1360°C to 1450°C.

As a specific control method for the molten iron temperature at the end of the dephosphorization reaction treatment, the most easy method is to calculate the molten iron temperature during the dephosphorization reaction treatment based on the composition analysis and the temperature of the flue gas generated from the dephosphorization reaction treatment, and to conduct the control on the basis of thus calculated values. According to the method, the flue gas is analyzed to determine the concentration of CO and of $CO_2$, and the generated volume of gas is calculated from the flue gas temperature. Then, the heat generated in the vessel is calculated from those obtained data, and finally the molten iron temperature is calculated from thus derived generated heat.

According to the method of the present invention, the gas oxygen is blown against the surface of molten iron bath via a top-blowing lance. With that type of charge mode of gas oxygen and of CaO source, the above-described phosphorus transfer rate can be further reduced, and the present invention is particularly advantageously carried out. That is, according to the charge mode, the CaO source is in powder form, and the CaO source is directly charged to the area on the surface of molten iron bath where the large amount of FeO is generated by the gas oxygen collided the surface of bath, as described before, so the area contacting the CaO (CaO source) with the FeO drastically increases compared with the method of top-feed of lime lumps. As a result, the efficiency and the rate of reaction between the $P_2O_5$ which was oxidized by FeO and the CaO increase, and the period of slag fusion in the CaO-FeO system shortens. Accordingly, the dephosphorization reaction completes instantaneously, and the succeeding slag fusion period is short, thus the rate of phosphorus transfer is reduced.

The third method for manufacturing raw material for phosphate fertilizer according to the present invention is described in the following.

The inventors of the present invention studied the dephosphorization reaction treatment of molten iron using a pot type or a torpedo car type vessel aiming to develop a method to manufacture high phosphate content slag at a high dephosphorization reaction efficiency, and found that the method of blowing gas oxygen and CaO source against the surface of molten iron bath via a top-blowing lance and to blowing gas containing a powder into the molten iron via an immersion lance or the like is very effective.

Therefore, the manufacturing method according to the present invention is to charge the CaO source and the oxygen source to a pot type or a torpedo car type vessel which holds molten iron therein to induce the dephosphorization reaction in the molten iron, and to collect the slag which contains phosphate generated by the dephosphorization reaction as the raw material for phosphate fertilizer, wherein at least a part of the gas oxygen and the CaO source is blown against the surface of molten iron bath via a top-blowing lance, while a gas containing powder is blown into the molten iron via an immersion lance and/or a blowing nozzle. With the method, high dephosphorization efficiency is attained with very small amount of $CaF_2$ charge or substantially without charge of $CaF_2$, and the amount of generated slag reduces resulted from the reduction in the charged amount of smelting agent. As a result, a single treatment stage can manufacture a raw material (slag) for phosphate fertilizer containing very little amount of fluorine and having high concentration of phosphate without adding special step.

The concentration of phosphate in the slag generated in the above-described dephosphorization reaction treatment of molten iron naturally differs with the P concentration in the molten iron before and after the treatment and with the amount of generated slag. Generally, however, the phosphate concentration in the slag is 7 mass% or more, (normally approximately 7 to 10 mass%). In the treatment under a specifically preferred condition provides 10 mass% or higher, (normally 10 to 15 mass%), of the phosphate concentration.

Blowing the gas oxygen against the surface of molten iron bath via a top-blowing lance induces generation of large amount of FeO caused by the gas oxygen collided the surface of bath, and a highly advantageous condition for enhancing the slag-formation of CaO is created. By directly charging the CaO source to the area where the large amount of FeO is generated via a top-blowing lance, the slag formation of CaO is effectively enhanced. Adding to the charge of the gas oxygen and the CaO source against the surface of molten iron bath, when a gas containing a powder is blown into the molten iron via an immersion nozzle or a blowing nozzle, the molten iron is agitated by the gas, which efficiently supplies the molten iron to the reaction interface, thus the dephosphorization reaction is effectively enhanced to give very high dephosphorization efficiency.

The preferred mode and the function and effect of the method for blowing the gas oxygen and the CaO source against the surface of molten iron bath via a top-blowing lance are the same with those described in the second manufacturing method according to the present invention.

The gas oxygen amount (oxygen-feed amount) to blow against the surface of molten iron bath via a top-blowing lance is preferably 0.7 Nm$^3$/min/ton-molten iron or less. If the oxygen-feed amount from the top-blowing lance is excessive, the slag-forming may induce blow-out of slag from the treatment vessel. By controlling the oxygen-feed amount via the top-blowing lance to 0.7 Nm$^3$/min/ton-molten iron or less, the slag-forming is suppressed to assure stable operation of the treatment.

The kind of powder which is blown into the molten iron together with the gas is not specifically limited. Examples of the powder are: a part of the CaO source such as lime powder; dust such as converter dust generated in iron works; carbon material such as coke powder; iron oxide such as sintered powder and mill scale; and one or more of powder of $CaCO_3$, $Ca(OH)_2$, $CaMg(CO_3)_2$, and the like.

As of these powders, when the CaO source such as lime powder is used as the powder, the CaO source is heated in the course of ascending through the molten iron, and the fusion to slag at the surface of molten iron bath is enhanced.

Use of dusts generated in iron works is effective utilization of waste. The powder of $CaCO_3$, $Ca(OH)_2$, $CaMg(CO_3)_2$, and the like generates gases ($CO_2$, $H_2O$) by thermal decomposition in molten iron, and the gases contribute to enhance the bath agitation. Furthermore, CaO generated by the thermal decomposition functions as the CaO source. Among these powders, when $CaMg(CO_3)_2$ is used, Mg which migrates into the slag becomes an effective component of fertilizer. The powder of iron oxide becomes a part of the oxygen source in the bath.

The kind of gas (carrier gas) blown into the molten iron together with the powder is also not specifically limited. Gas oxygen (pure oxygen gas or oxygen-laid gas) or inert gas such as $N_2$ and Ar may be applied as the gas. When the CaO source is blown with gas oxygen, the effect of acceleration of reaction is expected by what is called the "transitory reaction" proceeded during ascending the CaO source through the molten iron. However, since the oxygen gas is charged via an immersion lance and a blowing-nozzle, FeO is generated at tip of the lance and the noz zle, which raises a problem of life of the lance and the nozzle. On the other hand, use of inert gas such as $N_2$ and Ar prolongs the life of the lance and the nozzle compared with the life in the case of gas oxygen charge, though the effect in reaction cannot be expected. Therefore, the kind of applied gas may be selected considering the total cost including the life of lance and nozzle.

As for the means of blowing the CaO source into the molten iron, an immersion lance or a blowing nozzle which is mounted to the molten iron holding vessel, or both of them may be applied. The type of blowing nozzle is arbitrary one including bottom-blowing nozzle and side-blowing nozzle.

According to the method of the present invention conducting the treatment using a pot type or a torpedo car type vessel, the CaO source and the gas oxygen are blown against the surface of molten iron bath so as the CaO source charge rate X (kg/min) and the gas oxygen charge rate Y (Nm$^3$/min) via the top-feed lance to satisfy the formula (5) to further improve the dephosphorization efficiency.

$$0.3 \leqq X/Y \leqq 1.0 \tag{5}$$

A presumable reason of the improvement is that, in the above-given range of X/Y, low melting point CaO-FeO-base slag is readily generated from the FeO and the CaO generated in the flash area. To the contrary, if the X/Y is below 0.3, the FeO concentration becomes excessive relative to the CaO concentration so that the dephosphorization efficiency likely decreases, and, if the X/Y exceeds 1.0, the FeO concentration becomes excessively small relative to the CaO concentration, which results in difficulty in CaO fusion giving a tendency of decrease in the dephosphorization efficiency.

Fig. 13 is a graph showing the relation between the above-given X/Y and the dephosphorization percentage, derived from tests carried out by the inventors of the present invention. The tests were conducted on a molten iron held in a pot type vessel (150 ton) while blowing lime powder as the CaO source against the surface of molten iron bath via a top-blowing lance together with oxygen gas as the carrier gas, and injecting lime powder into the molten iron via an immersion lance to conduct the dephosphorization reaction treatment for about 15 minutes. The amount of lime powder which was blown against the surface of molten iron bath via the top-blowing lance was 50 to 70 mass% of the total amount of lime powder.

Fig. 13 shows that particularly high dephosphorization percentage was attained in the range of $0.3 \leqq A/B \leqq 1.0$.

For the case that substantially total amount of the CaO source is charged by blowing against the surface of molten iron bath via a top-blowing lance and injecting into the molten iron via an immersion-lance and/or blowing nozzle, the amount of CaO source charge via the top-blowing lance is preferably regulated to 20 to 80 mass% of the total charge amount of the CaO source. If the percentage of CaO source blown against the surface of molten iron bath via the top-blowing lance exceeds 80 mass% of the total charge CaO source, the effect of agitation of the molten iron gained by the CaO source injection into the molten iron becomes small, which results in difficulty in attaining the agitation power necessary for the dephosphorization reaction. If the percentage thereof is below 20 mass%, the above-described effect of enhancement of slag-formation by blowing the CaO source against the surface of molten iron bath is not satisfactory.

Fig. 14 is a graph showing the relation between the percentage of the charged quantity of CaO source via a top-blowing lance to the total charged quantity of CaO source and the dephosphorization efficiency for the cases that total amount of the CaO source is blown against the surface of molten metal bath via a top-blowing lance and is injected into the molten iron via an immersion lance and/or a blowing nozzle, based on the results of tests conducted by the inventors of the present invention. The tests were conducted on a molten iron containing 0.10 to 0.11 mass% P and 0.02 to 0.09 mass% Si, (molten iron temperature: 1300°C to 1320°C), held in a pot type vessel (150 ton) while blowing lime powder (0 to 6 kg/ton-molten iron) against the surface of molten iron bath via a top-blowing lance together with oxygen gas (4.5 to 5.0 Nm$^3$/ton-molten iron) as the carrier gas, and injecting residual amount of required lime powder (0 to 6 kg/ton-molten iron) into the molten iron via an immersion lance to conduct the dephosphorization reaction treatment (for 15 minutes). The ratio of the charge rate of CaO source via the top-blowing lance, A (kg/min), to the charge rate of gas oxygen, B (Nm$^3$/min), A/B, was fixed to 0.5.

Fig. 14 shows that, in the regions of below 20 mass% and above 80 mass% of the percentage of charged amount of CaO source via the top-blowing lance to the total charge amount of CaO source, the dephosphorization efficiency significantly decreases.

To further improve the dephosphorization efficiency and further decrease the amount of slag generated in the method according to the present invention, it is preferred that the Si concentration in the molten iron being subjected to dephosphorization reaction treatment is decreased. Specifically, it is preferable that the Si concentration in the molten iron being subjected to dephosphorization reaction treatment is 0.10 mass% or less. Generally, if the Si concentration in the molten iron before the dephosphorization treatment is low, the SiO$_2$ concentration in the slag decreases so that the fusion property of CaO further degrades to decrease the dephosphorization efficiency. Nevertheless, the method according to the present invention shows increase in the dephosphorization efficiency at lower Si concentration (0.10 mass% or less)in the molten iron before the dephosphorization reaction treatment. A presumable reason of the phenomenon is that the method according to the present invention adopts the blowing of gas oxygen and a powder as the CaO source against the surface of bath, thus enhancing the fusing of CaO by FeO even with not large amount of SiO$_2$, (or even with a high basicity slag), which should increase the efficiency of CaO contribution to the dephosphorization reaction. With that type of dephosphorization reaction treatment of molten iron with that low Si concentration, the amount of generated slag is decreased. With that high dephosphorization efficiency and small amount of generated slag, the minimization of the amount of charged CaF$_2$ or without charge of CaF$_2$ is realized, and furthermore, the phosphate concentration in slag is effectively increased, thus the raw material (slag) for phosphate fertilizer having excellent fertilizer performance is stably manufactured.

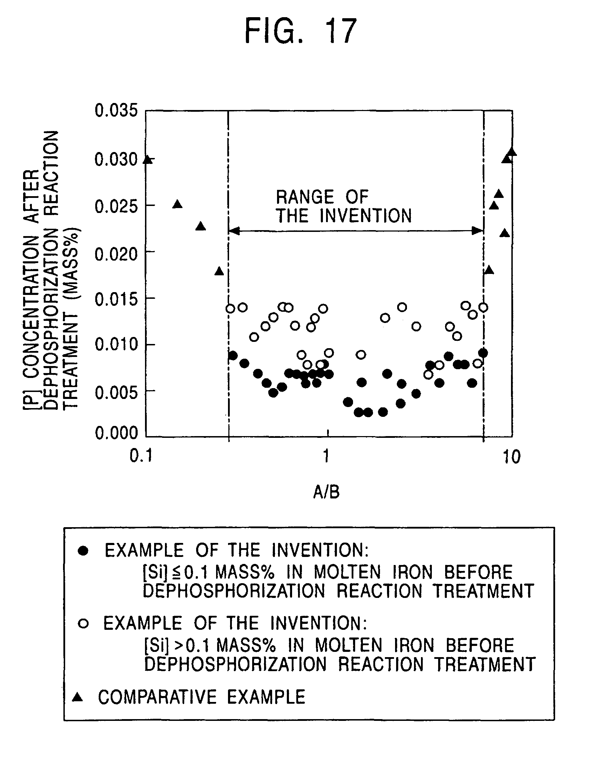

Fig. 15 is a graph showing an example of the relation between the Si concentration in molten iron before the dephosphorization reaction treatment and the necessary quantity of lime for the dephosphorization reaction treatment for the cases of the method according to the present invention. Fig. 15 also shows Comparative Examples of the case that the CaO source was charged solely by injecting into the bath, not blowing against the surface of molten iron bath.

The tests were conducted on a molten iron containing 0.10 to 0.11 mass% P and 0.02 to 0.09 mass% Si, (molten iron temperature: 1300°C to 1320°C), held in a pot type vessel (150 ton). For the case of Examples according to the present invention, the CaO source (lime powder) with charged amounts corresponding to the Si concentration in the molten iron, (4 to 10 kg/ton-molten iron), was blown against the surface of molten iron bath via a top-blowing lance together with oxygen gas (4.5 to 5 Nm$^3$/ton-molten iron) as the carrier gas. The fraction of top-blown lime charge was 0.5, and the balance of the necessary amount of lime (2 to 5 kg/ton-molten iron) was injected into the molten iron via an immersion lance. For the case of Comparative Examples, the entire CaO source (lime powder) was injected into the molten iron via the immersion lance. For both Examples and Comparative Examples, the treatment period was 15 minutes, and no CaF$_2$ was charged. Figure 15 gives the charged amount of lime necessary to attain the P concentration of 0.02 mass% or less after the treatment.

According to Fig. 15, for the case of Comparative Examples which conduct sole CaO source injection into molten iron bath, no charge of CaF$_2$ results in poor slag-formation of CaO, and large amount of CaO source is required. In particular, at 0.10 mass% or lower Si concentration in the molten iron, the slag basicity increases, which results in further difficulty in slag-formation of CaO, and the dephosphorization effect decreases. To the contrary, Examples according to the present invention showed enhanced slag formation owing to the quick reaction of FeO and CaO, thus lower Si concentration in the molten iron further decreases the charge amount of CaO source, which leads to the reduction in the generated slag amount.

When the Si concentration of molten iron manufactured in blast furnace or the like is 0.10 mass% or below, the dephosphorization reaction treatment to the molten iron may be given without applying desiliconization described below. If the Si concentration of molten iron manufactured in blast furnace or the like is higher than the above-given level, it is preferable to apply desiliconization treatment to the molten iron in blast furnace casthouse, molten iron pot, or the like before applying the dephosphorization reaction treatment to adjust the Si concentration in the molten iron to 0.10 mass% or below. The detail of the desiliconization treatment is as that described before.

As described before, when the amount of generating slag is wanted to decrease in the dephosphorization reaction treatment, the value of Lp (P distribution, (P) / [P]) which is an index of dephosphorization is requested to increase. The value of Lp, however, increases with the increase in the slag basicity. Accordingly, to increase Lp value in the dephosphorization reaction treatment conduced in regions of 2.5 or lower slag basicity, the treatment has to be done with increased amount, to some extent, of slag. As a result, the reduction in the slag amount is limited to a level corresponding to the Si level in tapped molten iron. To the contrary, the method according to the present invention can effectively enhance the slag-formation of CaO by blowing the gas oxygen and the CaO source against the surface of molten iron bath via a top-blowing lance. For example, the treatment can be conducted at regions of over 2.5 of slag basicity, and efficient dephosphorization treatment can be given with small amount of slag by increasing the Lp (P distribution, (P/[P]) value.

Dephosphonization treatment at above-described high slag basicity level increases the melting point of slag, which may result in insufficient slag formation of CaO source in the initial period of the treatment. To prevent the phenomenon, it is effective to increase the molten iron temperature at the beginning of the dephosphorization reaction treatment to enhance the initial period slag formation, thus to generate fused FeO in early stage. To do this, the molten iron temperature at the beginning of the dephosphorization reaction treatment is preferably set to 1280°C or above.

Fig. 16 illustrates an example of applying the present invention to a molten iron dephosphorization treatment in a blast furnace pot type dephosphorization facility. If necessary, desiliconization such as casthouse desiliconization is given before the dephosphorization treatment depending on the Si concentration of molten iron tapped from blast furnace. The dephosphorization treatment carried out by: charging the molten iron to a blast furnace pot 4; and injecting lime powder (smelting agent) via a lance 5 immersed in the molten iron, and blowing lime powder (smelting agent) against the surface of molten iron bath via a top-blowing lance 6 together with gas oxygen, while adjusting the injection-charge rate of the lime powder to assure full agitation of the molten iron.

The manufacturing conditions common to the above-described second and third manufacturing methods according to the present invention are described below.

The gas oxygen used in these manufacturing methods may be pure oxygen gas or oxygen-laid gas. The oxygen source charged to the molten iron holding vessel may be, other than gas oxygen, solid oxygen source such as iron oxide (for example, sinter powder and mill scale), which is charged by arbitrary method such as top-feed and injection into bath. To conduct efficient dephosphorization reaction treatment by charging (blowing) gas oxygen against the surface of bath, as described above, 50% or more, preferably 70% or more, (converted to gas oxygen), of the oxygen source charged to the molten iron holding vessel is preferably gas oxygen which is charged against the surface of molten iron bath via the top-blowing lance.

Generally, lime is used as the CaO source, and powder is used as the CaO source which is blown against the surface of molten iron bath via the top-blowing lance.

As for the CaO source, other than the CaO source blown against the surface of molten iron bath via the top-blowing lance, a portion of the CaO source may be charged to the molten iron by top-feed, injection, or the like. Even in that case, however, the charge percentages of the methods other than blowing against the surface of molten iron bath are preferably 70 mass% or less, and more preferably 20 mass% or less, to the total amount of charge. If the percentage of CaO source which is charged by a method other than blowing against the surface of molten iron bath via the top-blowing lance exceeds 70 mass% of the total charge amount, the effect of enhancing the dephosphorization reaction by the CaO source blowing against the surface of molten iron bath together with gas oxygen likely degrades.

For further increasing the dephosphorization reaction efficiency, it is preferable to apply gas agitation to the molten iron. The gas agitation is conducted by, for example, injecting inert gas such as nitrogen gas and argon gas into the molten iron via injection lance, bottom-blowing lance, and the like. The charge amount of the agitation gas is preferably 0.02 $Nm^3$/min/ton-molten iron or more to attain sufficient bath agitation, and is preferably 0.3 $Nm^3$/min/ton molten iron or less because excessively intense bath agitation likely excessively increase the reducing rate of generated FeO by C.

Other manufacturing conditions on manufacturing raw material for phosphate fertilizer according to the present invention advantageous to increase the phosphate in slag and to minimize the charge amount of $CaF_2$ are described below. Application of these manufacturing conditions to the above-described first through third manufacturing methods according to the present invention provides better results.

As described before, when gas oxygen is blown against the surface of molten iron bath via a top-blowing lance, large amount of FeO is generated by the gas oxygen collided the surface of bath, which creates a very advantageous condition for enhancing the slag-formation of CaO. By directly charging the CaO source to the area where the large amount of FeO is generated via a top-blowing lance, the slag-formation of CaO source (CaO) is effectively enhanced. As a result, efficient dephosphorization reaction treatment is attained with small amount of slag by adjusting the slag basicity to above 2.5 and by increasing the Lp (P distribution, (P)/[P]) level.

Dephosphorization treatment at above-described high slag basicity level increases the melting point of slag, which may result in insufficient slag-formation of CaO source in the initial period of the treatment. To prevent the phenomenon, it is effective to increase the molten iron temperature at the beginning of the dephosphorization reaction treatment to enhance the initial period slag-formation, thus to generate fused FeO in early period. To do this, the molten iron temperature at the beginning of the dephosphorization reaction treatment is preferably set to 1280°C or above.

The temperature condition is important in the dephosphorization reaction, and lower molten iron temperature is more advantageous in dephosphorization. However, when gas oxygen is charged against the surface of molten iron bath to enhance the oxidation reaction and to rapidly forming slag of CaO, as described before, the molten iron temperature increases at the area of the surface of molten iron bath where the gas oxygen is charged, which causes the hindrance of dephosphorization reaction. In this respect, the inventors of the present invention studied the methods to create temperature condition advantageous for the dephosphorization reaction on the area of the surface of molten iron bath where the gas oxygen is charged, and found that high dephosphorization reaction efficiency is attained by charging a substance, which substance absorbs the heat of molten iron by a chemical reaction and/or a thermal decomposition reaction, to the area on the surface of molten iron bath where the gas oxygen is charged, thus suppressing the temperature rise at the area on the surface of molten iron bath where the gas oxygen is charged to an adequate level without hindrance of action to accelerate the slag-formation of CaO source by the gas oxygen.

Therefore, in the method of blowing at least a part of the gas oxygen and of the CaO source against the surface of molten iron bath via a top-blowing lance, it is preferable to charge a substance, which substance absorbs the heat of molten iron by the chemical reaction and/or the thermal decomposition reaction, to the area on the surface of molten iron bath where the gas oxygen is charged, (the substance is hereinafter referred to as "the heat-absorbing substance").

In the area on the surface of molten iron bath where the gas oxygen is charged, the heat-absorbing substance is preferably charged to an area called the "flash point" which is generated by the oxygen-feed via a top-blowing oxygen-feed lance.

According to the above-described method of oxygen feed from above the bath using a top-blowing lance by blowing (injecting) the CaO source against the area on the surface of molten iron bath where the gas oxygen is charged, (particularly preferably to the area of above-described "flash point") , using gas oxygen or other carrier gas, the oxidation reaction by the gas oxygen concentrates on the surface of molten iron bath where the gas oxygen gas jet collides, and the direct charge of CaO source to the area where the gas oxygen gas jet gives strong agitation, (or to the main products of FeO), effectively enhances the slag-formation of CaO, thus the contact efficiency of CaO with FeO increases to create an optimum condition for contacting CaO with FeO, which particularly enhances significantly the dephosphorization reaction. Consequently, with that type of method, the dephosphorization reaction is further effectively enhanced by directly charging the heat-absorbing substance to the above-described area where the oxidation reaction by the gas oxygen is concentrated and where the gas oxygen gas jet gives strong agitation, thus suppressing the increase in the molten iron bath at that area.

The heat-absorbing substance is not specifically limited if only the substance removes (absorbs) the heat of molten iron by a chemical reaction or a thermal decomposition reaction, or both of them, which reactions are induced on charging the substance to the molten iron. Therefore, the heat-absorbing substance may be in gas or solid form.

Applicable heat-absorbing substance in gas form includes carbon dioxide, steam, and nitrogen oxide (NOx), and one or more of them can be applied. That kind of heat-absorbing substance mainly reacts with Fe when it is charged onto the surface of molten iron bath, (for example, $CO_2 + Fe \square FeO + CO$, and $H_2O + Fe \square FeO + H_2$), and the substance absorbs the heat of molten iron. As a result, the Fe oxidation by gas oxygen, $(Fe + (1/2)O_2 \square FeO)$, becomes totally endothermic reaction or decreases the generated heat significantly. Among the above-given heat-absorbing substances in gas form, carbon dioxide and steam which are generated at large quantity in ironworks are preferred because these substances are readily available and have strong thermal effect. In addition, inclusion of nitrogen to those gases raises no specific problem even if the purity of nitrogen decreases to some extent.

Applicable heat-absorbing substance in solid form includes carbonate of metal, hydroxide of metal, particularly preferably carbonate and hydroxide of alkali metal and of alkali earth metal, and one or more of them may be applied. Those kinds of solid heat-absorbing substances induce thermal decomposition reaction when they are charged to the surface of molten iron bath, conduct heat-absorption from the molten iron, and generate $CO_2$ or $H_2O$ by thermal decomposition. Since the $CO_2$ or $H_2O$ further functions as the heat-absorbing substance, as described above, particularly strong heat-absorption effect is attained. Examples of those kinds of metallic carbonate are $CaCO_3$, $CaMg(CO_3)_2$, $MgCO_3$, $NaCO_3$, $FeCO_3$, $MnCO_3$, and $NaHCO_3$ (sodium hydrogen carbonate). Examples of metallic hydroxide are $Ca(OH)_2$, $Mg(OH)_2$, $Ba(OH)_2$, $Al(OH)_3$, $Fe(OH)_2$, $Mn(OH)_n$, and $Ni(OH)_n$, and one or more of them may be applied.

Among these solid heat-absorbing substances, $CaCO_3$, $Ca(OH)_2$, and $CaMg(CO_3)_2$ are particularly preferred because they have strong advantages that they are readily available and that they generate CaO by the above-described thermal decomposition, which CaO functions as the CaO source.

When $CaMg(CO_3)_2$ is used, the Mg migrated into slag becomes an effective component of fertilizer. Normally these solid heat-absorbing substances are charged in a form of semi-calcined limestone, or dolomite.

Regarding the solid heat-absorbing substance, excessively coarse particles thereof fail in rapid progress of thermal decomposition so that the solid heat-absorbing substance is preferably particles having mean particle size of 5 mm or smaller.

The above-described gas heat-absorbing substance and solid heat-absorbing substance may be applied together. The gas heat-absorbing substance may be used as a part or the total of the carrier gas for charging the solid heat-absorbing substance against the surface of molten iron bath.

The method for charging the heat-absorbing substance (gas and/or solid) is not specifically limited. Blowing against the surface of molten iron bath using a top-blowing lance or other lance, or top-feeding (charging by a chute for the case of solid heat-absorbing substance) may be applied. To surely charge the heat-absorbing substance to the area on the surface of molten iron bath where the gas oxygen is charged, (particularly preferably to the "flash point"), thus to attain the above-described effect, it is preferable to charge the heat-absorbing substance against the surface of molten iron bath via a lance, particularly preferable to charge thereof against the surface of molten iron bath using a top-blowing lance.

As of these solid heat-absorbing substances, $CaCO_3$, $Ca(OH)_2$, and $CaMg(CO_3)_2$ generate CaO by thermal decomposition, and the CaO functions as the CaO source. Accordingly, the above-described solid heat-absorbing substances may be charged instead of a part or the total of CaO source, and the CaO generated from the substances may be used as a part or the total of the substantial CaO source to conduct the dephosphorization reaction treatment. In that case, instead of a part or the total of CaO source, one or more of the compound selected from the group consisting of $CaCO_3$, $Ca(OH)_2$, and $CaMg(CO_3)_2$, (hereinafter referred to as "the CaO-source-generating and heat-absorbing substance"), is charged as a CaO-source-generating and heat-absorbing substance and a substance to absorb the heat of molten iron by a chemical reaction and/or a thermal decomposition reaction.

With the method, the above-described CaO-source-generating and heat-absorbing substance charged onto the surface of molten iron bath is thermally decomposed to absorb the heat of molten iron, and $CO_2$ and $H_2O$ which act as heat-absorbing substances are generated by the thermal decomposition. As a result, there appears a merit of conducting further heat absorption from the molten iron by the reaction of $CO_2$ or $H_2O$ with Fe, and furthermore there appears an effect similar with that attained by charging both the CaO source and the heat-absorbing substance against the surface of molten iron bath where the gas oxygen is charged. Thus, high dephosphorization reaction efficiency is attained.

The method for charging the CaO-source-generating and heat-absorbing substances may be similar with the above-described method for charging heat-absorbing substances. In that case, with the reason described before, the above-described CaO-source-generating and heat-absorbing substances are preferably charged to an area called the "flash point" generated by the oxygen feed via a top-blowing lance, among the areas on the surface of molten iron bath where the gas oxygen is charged.

According to the above-described several manufacturing methods provided by the present invention, a raw material (slag) for phosphate fertilizer, which raw material contains very little amount of fluorine and has high concentration of phosphate, is efficiently manufactured at low cost by applying a single dephosphorization reaction treatment stage to a normal molten iron containing 0.2 mass% or less P.

Furthermore, these manufacturing methods can give the dephosphorization reaction treatment to the molten iron containing large amount of P, obtained from a high phosphorus iron ore, containing 0.06 mass% or more of P, at high dephosphorization reaction efficiency. By applying dephosphorization reaction treatment to that high P content molten iron, particularly high phosphate concentration raw material (slag) for phosphate fertilizer is manufactured.

Most of the conventionally used iron ores for molten iron manufacture contain 0.06 mass% or less P, and iron ores having P content above that level are utilized very little because the efficient dephosphorization is difficult. As a result, iron ore mines preferentially produce low phosphorus content ores. In this situation, there are increasing concerns about the increasing energy and labor for excavation and the resource depletion. Thus there appears a serious issue of establishing an iron and steel making process allowing utilizing large quantity of high phosphorus iron ores from the viewpoint of utilization of raw material resources. In this regard, the above-described dephosphorization reaction treatment can conduct dephosphorization reaction treatment of molten iron obtained from the high phosphorus iron ores containing 0.06 mass% or more P in blast furnace, at high dephosphorization reaction efficiency, and realizes the utilization of large amount of high phosphorus iron ores. The slag generated from the method provides particularly high phosphate concentration, and the slag is particularly suitable for the raw material for phosphate fertilizer.

The raw material for phosphate fertilizer according to the present invention is not limited to the slag obtained by the above-described manufacturing methods, and the slag may be the one obtained by, for example, injecting the CaO source into molten iron via an immersion nozzle, a bottom-blowing nozzle, or the like, as the CaO source charging mode.

**EXAMPLES**

[EXAMPLE I]

Dephosphorization reaction treatment was applied to a blast furnace molten iron using a 300 ton converter by charging the molten iron to the converter, then by charging a specified amount of CaO source, followed by blowing oxygen thereto from a top-blowing lance. The treatment period was the same for both Examples according to the present invention and Comparative Examples.

Comparative Examples conducted the dephosphorization reaction treatment without applying desiliconization treatment to the molten iron. On the other hand, Examples according to the present invention conducted the dephosphorization reaction treatment after applying casthouse desiliconization treatment to the tapped molten iron, or applying desiliconization treatment by [casthouse desiliconization + ladle desiliconization] thereto, to adjust the Si content of the molten iron to 0.07 mass% or less. Examples according to the present invention were conducted without charging $CaF_2$.

Table 2 shows the dephosphorization reaction treatment conditions and the manufactured slag compositions. Table 2 shows that Examples of dephosphorization reaction treatment after decreasing the Si content in the molten iron to 0.07 mass% or less (particularly 0.03 mass% or less) in advance gave drastic improvement of dephosphorization efficiency and small amount of generated slag compared with Comparative Examples, thus provided raw materials for phosphate fertilizer having high concentration of phosphate. In addition, Examples of dephosphorization reaction treatment were conducted without charging $CaF_2$ so that the generated slag contains small amount of fluorine (fluorine is an impurity).

Table 2

| | | Comparative Example 1 | Example 1 | Example 2 | Example 3 |
|---|---|---|---|---|---|
| Treatment condition | Molten iron temperature at the beginning of treatment (°C) | 1243 | 1337 | 1320 | 1315 |
| | Si concentration in molten iron before the treatment (mass%) | 0.19 | 0.06 | 0.07 | 0.01 |
| | Top-feed lime (kg/T) | 14 | 6 | 4 | 3 |
| | Molten iron temperature at the end of treatment (°C) | 1300 | 1301 | 1310 | 1308 |
| | P concentration in molten iron after the treatment (mass%) | 0.012 | 0.006 | 0.005 | 0.005 |
| | Phosphorus distribution Lp | 220 | 550 | 780 | 850 |

Table 2   (continued)

| | | Comparative Example 1 | Example 1 | Example 2 | Example 3 |
|---|---|---|---|---|---|
| Slag composition | T · Fe (mass%) | 4.7 | 5.8 | 6.4 | 8.3 |
| | CaO (mass%) | 51.5 | 50.8 | 50.9 | 52.3 |
| | $Al_2O_3$ (mass%) | 2.1 | 2.5 | 2.6 | 2.7 |
| | MgO (mass%) | 2.9 | 3.2 | 3.3 | 3.5 |
| | MnO (mass%) | 5.2 | 6.8 | 7.1 | 8.1 |
| | F (mass%) | 0.8 | 0.1 | 0.1 | 0.2 |
| | $P_2O_5$ (mass%) | 6.0 | 7.6 | 8.9 | 9.7 |
| | C- $P_2O_5$ (mass%) | 1.5 | 7.1 | 8.4 | 8.6 |

[EXAMPLE II]

A molten iron tapped from a blast furnace was subjected to desiliconization treatment in casthouse, and at need, in molten iron pot, then was subjected to desulfurization treatment in the molten iron pot using mechanical agitation, followed by subjected to dephosphorization reaction treatment in a 250 ton converter. The molten iron temperature before and after the dephosphorization reaction treatment was controlled to a range from 1250°C to 1350°C. The CaO source applied was calcined lime consisting mainly of CaO, having particles undersize of 200 mesh sieve. The unit requirement of CaO was selected to a range from 5 to 15 kg/ton-molten iron depending on the Si concentration in the molten iron.

The dephosphorization reaction treatment was conducted, as shown in Fig. 10, by blowing oxygen against the surface of bath as the carrier gas using a top-blowing lance to charge the CaO source and the oxygen source for a smelting period of 10 minutes. The operation was carried out under the conditions of varied ratio of A/B, where A signifies the oxygen charge rate ($Nm^3$/min/ton-molten iron), and B signifies the CaO source charge rate (kg/min/ton-molten iron). No $CaF_2$ was charged.

From a bottom-blowing nozzle, nitrogen gas as the agitation gas was injected into the molten iron at rates from 0.05 to 0.15 $Nm^3$/min/ton-molten iron.

The Si concentration in the molten iron treated by the dephosphorization reaction was in a range from trace amount to 0.3 mass%.

Fig. 17 is a graph showing the relation between the ratio of the oxygen charge rate A ($Nm^3$/min/ton-molten iron) to the CaO source charge rate B (kg/min/ton-molten iron), A/B, and the P concentration in molten iron after the dephosphorization reaction treatment. As seen in Fig. 17, the treatment conducted in A/B range from 0.3 to 7 gave the P concentration in the molten iron after the dephosphorization reaction treatment of 0.015 mass% or less, which level is the target [P] concentration. In particular, the treatment of molten iron containing 0.01 mass% or less Si stably achieved the low P standard of [P] $\leqq$ 0.010 mass%.

The molten iron treatment in a range from 1.2 to 2.5 of A/B provided particularly low level of [P], which shows that the highest dephosphorization reaction efficiency is attained in the range.

To the contrary, the treatment in a range of below 0.3 and above 7 of A/B failed to attain 0.015 mass% or less of P concentration in the molten iron after the dephosphorization reaction treatment , which level is the target [P] concentration.

Table 3 shows typical slag compositions obtained in the EXAMPLE II.

Table 3

| No. | Slag composition (mass%) | | | | | | | | Citric-solubilization percentage of phosphate (%) |
|---|---|---|---|---|---|---|---|---|---|
| | $SiO_2$ | CaO | $Al_2O_3$ | MgO | T-Fe | F | $P_2O_5$ | $C-P_2O_5$ | |
| 1 | 11 | 46 | 7 | 5 | 7 | 0.08 | 12.4 | 11.9 | 96 |
| 2 | 13 | 45 | 8 | 6 | 6 | 0.10 | 11.5 | 10.9 | 95 |

[EXAMPLE III]

A molten iron tapped from a blast furnace was subjected to desiliconization treatment in casthouse, and at need, in a molten iron pot, then was subjected to desulfurization treatment in the molten iron pot using mechanical agitation, followed by subjecting to dephosphorization reaction treatment in a 250 ton converter. The molten iron temperature at the end of the dephosphorization reaction treatment was controlled to a range from 1360°C to 1450°C. The CaO source applied was calcined lime consisting mainly of CaO, having particles undersize of 200 mesh sieve.

The dephosphorization reaction treatment was conducted, as shown in Fig. 10, by blowing oxygen against the surface of bath as the carrier gas using a top-blowing lance to charge the CaO source and the oxygen source for a smelting period of 10 minutes. The charge of CaO source and oxygen source was done for 10 minutes of smelting period under the conditions of 0.3 to 7 of A/B, where A signifies the oxygen charge rate ($Nm^3$/min/ton-molten iron), and B signifies the CaO source charge rate (kg/min/ton-molten iron). No $CaF_2$ was charged.

From a bottom-blowing nozzle, nitrogen gas as the agitation gas was injected into the molten iron at rates from 0.05 to 0.15 $Nm^3$/min/ton-molten iron.

Table 4 shows the slag compositions obtained in EXAMPLE III.

Table 4

| No. | Slag composition (mass%) | | | | | | | | Citric-solubilization percentage of phosphate (%) |
|---|---|---|---|---|---|---|---|---|---|
| | $SiO_2$ | CaO | $Al_2O_3$ | MgO | T-Fe | F | $P_2O_5$ | $C-P_2O_5$ | |
| 1 | 12 | 43 | 7 | 8 | 9 | 0.11 | 13.2 | 12.5 | 95 |
| 2 | 14 | 45 | 6 | 7 | 7 | 0.13 | 12.7 | 12.1 | 95 |

[EXAMPLE IV]

A molten iron tapped from a blast furnace was subjected to desiliconization treatment in casthouse, which molten iron was then transferred to a molten iron pot, where the molten iron was subjected to desiliconization treatment. After discharged slag, the molten iron was charged to a 300 ton converter for conducting the dephosphorization reaction treatment. The dephosphorization reaction treatment was conducted by blowing oxygen gas against the surface of molten iron bath via a top-blowing lance, and lime powder having 3 mm or smaller particle sizes was blown against the surface of molten iron bath using the oxygen gas as the carrier gas, thus the gas oxygen and the CaO source were charged under the condition satisfying A/B being from 0.3 to 7, where A designates the oxygen charge rate ($Nm^3$/min/ton-molten iron), and B signifies the CaO source charge rate (kg/min/ton-molten iron). The treatment was conducted at temperatures at the end of the treatment from 1360°C to 1450°C, without charging $CaF_2$. The dephosphorization reaction treatment was done for 10 to 11 minutes while agitating the molten iron by blowing nitrogen gas from bottom of the converter at a rate of 0.1 $Nm^3$/min/ton-molten iron. The molten iron temperature before the dephosphorization reaction treatment and the scrap charge quantity were adjusted to control the molten iron temperature at the end of the dephosphorization reaction treatment.

Table 5 shows the compositions of slag obtained in EXAMPLE IV.

Table 5

| No. | Slag composition (mass%) | | | | | | | | Citric-solubilization percentage of phosphate (%) |
|---|---|---|---|---|---|---|---|---|---|
| | $SiO_2$ | CaO | $Al_2O_3$ | MgO | T-Fe | F | $P_2O_5$ | $C-P_2O_5$ | |
| 1 | 14 | 41 | 6 | 4 | 8 | 0.09 | 11.9 | 11.5 | 97 |

Table 5   (continued)

| No. | Slag composition (mass%) | | | | | | | | Citric-solubilization percentage of phosphate (%) |
|---|---|---|---|---|---|---|---|---|---|
| | $SiO_2$ | CaO | $Al_2O_3$ | MgO | T-Fe | F | $P_2O_5$ | $C$-$P_2O_5$ | |
| 2 | 11 | 46 | 5 | 5 | 7 | 0.13 | 13.5 | 12.8 | 95 |

[EXAMPLE V]

A molten iron tapped from a blast furnace was subjected to desiliconization treatment in casthouse, which molten iron was then transferred to a molten iron pot, where the molten iron was subjected to desiliconization treatment. After discharged slag, the molten iron was charged to a 300 ton converter for conducting the dephosphorization reaction treatment. The dephosphorization reaction treatment was conducted by blowing oxygen gas against the surface of molten iron bath via a top-blowing lance, and lime powder having 1 mm or smaller particle size and $CaCO_3$ as the heat-absorbing substance were blown against the surface of molten iron bath using the oxygen gas as the carrier gas, thus the gas oxygen and the CaO source were charged under the condition satisfying A/B being from 0.3 to 7, where A designates the oxygen charge rate ($Nm^3$/min/ton-molten iron), and B signifies the CaO source charge rate (kg/min/ton-molten iron). The treatment was conducted at temperatures at the end of the treatment from 1360°C to 1450°C, without charging $CaF_2$. The dephosphorization reaction treatment was done for 10 to 11 minutes while agitating the molten iron by blowing nitrogen gas from bottom of the converter at a rate of 0.1 $Nm^3$/min/ton-molten iron. The molten iron temperature before the dephosphorization reaction treatment and the scrap charge quantity were adjusted to control the molten iron temperature at the end of the dephosphorization reaction treatment.
Table 6 shows the compositions of slag obtained in EXAMPLE V.

Table 6

| No. | Slag composition (mass%) | | | | | | | | Citric- solubilization percentage of phosphate (%) |
|---|---|---|---|---|---|---|---|---|---|
| | $SiO_2$ | CaO | $Al_2O_3$ | MgO | T-Fe | F | $P_2O_5$ | $C$-$P_2O_5$ | |
| 1 | 10 | 42 | 6 | 8 | 7 | 0.09 | 13.1 | 12.6 | 96 |
| 2 | 14 | 41 | 8 | 5 | 8 | 0.08 | 11.9 | 11.5 | 97 |

[EXAMPLE VI]

A molten iron tapped from a blast furnace was subjected to desiliconization treatment in casthouse, which molten iron was then transferred to a molten iron pot, where the molten iron was subjected to desiliconization treatment. After discharged slag, the molten iron pot was transferred to a dephosphorization station, and the dephosphorization reaction treatment was carried out.
The dephosphorization reaction treatment was conducted by blowing lime powder against the surface of molten iron bath via a top-blowing lance using oxygen gas as the carrier gas, and lime powder is injected into the molten iron via an immersion lance. The ratio of lime powder charge rate via the top-blowing lance to the lime powder charge rate via the immersion lance was controlled to a range from 4/1 to 3/1. The molten iron temperature at the end of treatment was controlled to a range from 1280°C to 1350°C. No $CaF_2$ was charged. The treatment period was 20 minutes.
Table 7shows the compositions of slag obtained in EXAMPLE VI.

Table 7

| No. | Slag composition (mass%) | | | | | | | | Citric-solubilization percentage of phosphate (%) |
|---|---|---|---|---|---|---|---|---|---|
| | $SiO_2$ | CaO | $Al_2O_3$ | MgO | T-Fe | F | $P_2O_5$ | $C$-$P_2O_5$ | |
| 1 | 13 | 46 | 5 | 7 | 5 | 0.11 | 12.5 | 11.8 | 94 |
| 2 | 11 | 45 | 7 | 8 | 4 | 0.07 | 12.8 | 12.5 | 98 |

[EXAMPLE VII]

A raw material (slag) for phosphate fertilizer, which slag contains phosphate produced from dephosphorization reaction in molten iron, was pulverized to particles of 1 mm or smaller sizes. The pulverized slag was weighed out to a specified amount. Each of thus weighed out slag. was mixed with a binder given in Table 8, and was further adjusted to a specific water content level, then was granulated using a test rotary dish type granulator. The granulates were dehydrated to dry in a box type small drier at 100□C, and were sieved to prepare samples Nos. 1 to 5, having particle sizes from 1 to 5 mm. The granulating property, hardness, and collapsing property in water of these granulates were evaluated.

Visual observation was given to the granulating property. The evaluation was given as " for granulated particles, and "X" for not-granulated particles. Hardness was determined using a hardness tester. Collapsing property in water was tested by placing 50 sample particles in water for 24 hours without giving disturbance. For the particles all of which were collapsed or were decreased in their hardness to 100 g or below, "X" evaluation was given. For the particles other than the "X" evaluation was evaluated as " . Table 3 shows the results. For the samples which were not granulated, (granulating property "X"), no evaluation on hardness and collapsing property in water was available.

Table 8

| Slag | Binder | | Performance | | |
|---|---|---|---|---|---|
| | Kind | Charged amount *1 | Granulating property | Hardness | Collapsing property in water |
| No.1 | (Water) | Adequate amount | × | - | - |
| No.2 | (dil. Sulfuric acid) | Adequate amount | × | - | - |
| No.3 | Magnesium sulfate | 1.2% | ○ | 0.6kg | ○ |
| No.4 | Lignin | 2.8% | ○ | 0.4kg | ○ |
| No.5 | Starch | 1.0% | ○ | 2.0kg | ○ |

*1 Percentage of pouring-on to the slag (mass%)

**Industrial Applicability**

The raw material for phosphate fertilizer according to the present invention has high phosphate concentration and necessary level of citric-solubilization percentage of phosphate. Therefore, the raw material is useful for manufacturing phosphate fertilizers having excellent fertilizer characteristics. The method for manufacturing the raw material for phosphate fertilizer according to the present invention provides a slag which has high phosphate concentration and contains very small amount of fluorine. Therefore, the method is useful as a method for manufacturing raw material for phosphate fertilizers having excellent fertilizer characteristics.

**Claims**

1. A raw material for phosphate fertilizer consisting essentially of a slag which contains phosphate formed in a dephosphorization reaction in molten iron, the phosphate content satisfying the formula (1)

$$[P_2O_5] \geqq 5.6 \times [F] + 7 \qquad (1)$$

where, $[P_2O_5]$ is the phosphate content in slag, (mass%) , and $[F]$ is the fluorine content in slag, (mass%).

2. A raw material for phosphate fertilizer consisting essentially of a slag which contains phosphate formed in a dephosphorization reaction in molten iron, the phosphate content satisfying the formula (2)

$$[P_2O_5] \geqq 5.6 \times [F] + 10 \qquad (2)$$

where, $[P_2O_5]$ is the phosphate content in slag, (mass%), and $[F]$ is the fluorine content in slag, (mass%).

3. The raw material for phosphate fertilizer according to claim 1 or claim 2, wherein the slag substantially does not contain fluorine.

4. The raw material for phosphate fertilizer according to any one of claims 1 to 3, wherein the slag is a slag that is recovered in a preliminary treatment step of molten iron produced in a blast furnace.

5. A phosphate fertilizer consisting essentially of the raw material for phosphate fertilizer according to any one of claims 1 to 4, or containing the raw material therefor according to any one of claims 1 to 4 as a main raw material.

6. The phosphate fertilizer according to claim 5, wherein the phosphate fertilizer is produced by the step of pulverizing and/or sizing the raw material for phosphate fertilizer.

7. The phosphate fertilizer according to claim 5 or claim 6, wherein the phosphate fertilizer is a granulated material obtained by adding a binder to the raw material for phosphate fertilizer and by granulating the mixture of the binder and the raw material.

8. The phosphate fertilizer according to claim 7, wherein the main component of the binder is at least one substance selected from the group consisting of starch, magnesium sulfate, and lignin.

9. The phosphate fertilizer according to claim 8, wherein the main component of the binder is starch.

10. A method for manufacturing raw material for phosphate fertilizer, comprising the steps of: charging a CaO source and an oxygen source to a molten iron containing 0.07 mass% or less Si to induce dephosphorization reaction in the molten iron; and recovering a slag, which contains phosphate generated by the dephosphorization reaction, as the raw material for phosphate fertilizer.

11. The method for manufacturing raw material for phosphate fertilizer according to claim 10, wherein the temperature of molten iron at the beginning of treatment to induce the dephosphorization reaction in the molten iron is 1280°C or more.

12. The method for manufacturing raw material for phosphate fertilizer according to claim 10 or claim 11, wherein the temperature of molten iron at the end of treatment to induce the dephosphorization reaction in the molten iron is in a range from 1280°C to 1360°C.

13. The method for manufacturing raw material for phosphate fertilizer according to any one of claims 10 to 12, wherein the CaO source and the oxygen source are charged to the same position on the surface of molten iron bath or in the molten iron bath in a treatment vessel.

14. The method for manufacturing raw material for phosphate fertilizer according to any one of claims 10 to 13, wherein the CaO source is blown against the surface of molten iron bath from above the bath in the treatment vessel.

15. A method for manufacturing raw material for phosphate fertilizer, comprising the steps of charging a CaO source and an oxygen source into a vessel holding a molten iron therein to induce dephosphorization reaction in the molten iron, and recovering a slag, which contains phosphate generated by the dephosphorization reaction, as the raw material for phosphate fertilizer; at least a part of a gas oxygen and of the CaO source being blown against the surface of molten iron bath via a top-blow lance to induce dephosphorization reaction in the molten iron; and the charge rate B (kg/min/ton-molten iron) of the CaO source blown against the surface of molten iron bath, converted to CaO, satisfying the formula (3) in relation to the charge rate A (Nm$^3$/min/ton-molten iron) of the oxygen source charged into the vessel, converted to gas oxygen:

$$0.3 \leqq A/B \leqq 7 \qquad (3)$$

16. The method for manufacturing raw material for phosphate fertilizer according to claim 15, wherein the charge rate B (kg/min/ton-molten iron) of CaO source, converted to CaO, satisfies the formula (4) in relation to the charge rate A (Nm$^3$/min/ton-molten iron) of the oxygen source charged into the vessel, converted to gas oxygen:

$$1.2 \leqq A/B \leqq 2.5 \tag{4}$$

17. The method for manufacturing raw material for phosphate fertilizer according to claim 15 or claim 16, wherein the temperature of molten iron at the beginning of treatment to induce the dephosphorization reaction in the molten iron is in a range from 1280°C to 1450°C.

18. A method for manufacturing raw material for phosphate fertilizer, comprising the steps of charging a CaO source and an oxygen source into a pot type vessel or a torpedo car type. vessel, holding a molten iron therein, to induce dephosphorization reaction in the molten iron, and recovering a slag, which contains phosphate generated in the dephosphorization reaction, as the raw material for phosphate fertilizer; at least a part of a gas oxygen and of the CaO source being blown against the surface of molten iron bath via a top-blow lance, and a gas which contains a powder being blown into the molten iron via an immersion lance and/or a blowing nozzle.

19. The method for manufacturing raw material for phosphate fertilizer according to any one of claims 15 to 18, wherein a molten iron containing 0.10 mass% or less Si is treated.

20. The method for manufacturing raw material for phosphate fertilizer according to any one of claims 15 to 19, wherein $CaF_2$ is substantially not charged or $CaF_2$ is charged by amounts of 1 kg/ton-molten iron or less.

21. The method for manufacturing raw material for phosphate fertilizer according to any one of claims 15-20, wherein at least a part of the CaO source charged from top-blowing lance is blown to a surface area of molten iron bath where the gas oxygen is blown.

22. The method for manufacturing raw material for phosphate fertilizer according to claim 21, wherein at least a part of the CaO source blown via the top-blowing lance is blown to a flash point appeared on the surface of molten iron bath.

23. The method for manufacturing raw material for phosphate fertilizer according to claim 21 or claim 22, wherein at least a part of the CaO source is blown against the surface of molten iron bath together with oxygen gas as the carrier gas.

24. A method for manufacturing phosphate fertilizer using the raw material for phosphate fertilizer manufactured by the method according to any one of claims 10 to 24.

25. The method for manufacturing phosphate fertilizer according to claim 24, further comprising the step of pulverizing and/or sizing the raw material for phosphate fertilizer.

26. The method for manufacturing phosphate fertilizer according to claim 24 or claim 25, further comprising the step of charging a binder to the raw material for phosphate fertilizer and granulating the mixture of the binder and the raw material for phosphate fertilizer.

27. The method for manufacturing phosphate fertilizer according to claim 26, wherein the main component of the binder is at least one substance selected from the group consisting of starch, magnesium sulfate, and lignin.

28. The method for manufacturing phosphate fertilizer according to claim 27, wherein the main component of the binder is starch.

# FIG. 1

# FIG. 2

(a)

(b)

# FIG. 3

SHOVEL LOADER

GRANULATED FERTILIZER

EP 1 391 445 A1

# FIG. 4

EP 1 391 445 A1

# FIG. 5

PHOSPHORUS-DISTRIBUTION Lp

CHARGED T.CaO

T.CaO (K/T)

[Si] CONTENT
BEFORE DEPHOSPHORIZATION
REACTION TREATMENT (%)

# FIG. 6

PHOSPHORUS-DISTRIBUTION Lp

○ TREATMENT USING CONVERTER
● TREATMENT USING POT TYPE
   VESSEL

MOLTEN IRON TEMPERATURE
BEFORE DEPHOSPHORIZATION
REACTION TREATMENT (°C)

# FIG. 7

# FIG. 8

# FIG. 9

○ OXYGEN: TOP-BLOWING,
   QUICKLIME: TOP-FEEDING
● CaO-FeO-BASE SOLVENT: TOP-FEEDING

PHOSPHORUS-DISTRIBUTION Lp

MOLTEN IRON TEMPERATURE
BEFORE DEPHOSPHORIZATION
REACTION TREATMENT (°C)

# FIG. 15

● EXAMPLE
○ COMPARATIVE
   EXAMPLE

LIME CHARGE
(kg/ton-MOLTEN IRON)

Si CONCENTRATION IN MOLTEN
IRON BEFORE DEPHOSPHORIZATION
REACTION TREATMENT (MASS%)

# FIG. 10

CaO SOURCE

OXYGEN

2

1

SLAG

MOLTEN IRON

BOTTOM-BLOWING GAS

3

# FIG. 16

6

5

SLAG

MOLTEN IRON

4

# FIG. 11

Legend:
- ○ TOP-FEED, MOLTEN IRON TEMPERATURE AFTER TREATMENT 1280–1350 °C
- ▲ EXAMPLE OF THE INVENTION, MOLTEN IRON TEMPERATURE AFTER TREATMENT: 1360–1450 °C
- ● EXAMPLE OF THE INVENTION, MOLTEN IRON TEMPERATURE AFTER TREATMENT: 1280–1360 °C

Y-axis: LIME DEPHOSPHORIZATION EFFICIENCY (–)
X-axis: Si CONCENTRATION IN MOLTEN IRON (MASS%)

# FIG. 12

1360–1450 °C

Y-axis: LIME DEPHOSPHORIZATION EFFICIENCY (–)
X-axis: $CaF_2$ CHARGE (kg/ton-MOLTEN IRON)

## FIG. 13

## FIG. 14

# FIG. 17

EXAMPLE OF THE INVENTION:
[Si] ≤ 0.1 MASS% IN MOLTEN IRON BEFORE DEPHOSPHORIZATION REACTION TREATMENT

○ EXAMPLE OF THE INVENTION:
[Si] > 0.1 MASS% IN MOLTEN IRON BEFORE DEPHOSPHORIZATION REACTION TREATMENT

▲ COMPARATIVE EXAMPLE

EP 1 391 445 A1

## INTERNATIONAL SEARCH REPORT

International application No.

PCT/JP02/04785

### A. CLASSIFICATION OF SUBJECT MATTER
Int.Cl$^7$ C05B5/00, C05D3/04

According to International Patent Classification (IPC) or to both national classification and IPC

### B. FIELDS SEARCHED

Minimum documentation searched (classification system followed by classification symbols)
Int.Cl$^7$ C05B1/00-C05G5/00, C21C1/00-5/56, B09B1/00-5/00

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2-277709 A (Kawasaki Steel Corp.),<br>14 November, 1990 (14.11.90),<br>Claims; page 3, lower right column, line 13 to page 4, upper left column, line 3; Fig. 3<br>(Family: none) | 1-7<br>8,9 |
| X<br>Y | JP 56-127717 A (Nippon Steel Corp.),<br>06 October, 1981 (06.10.81),<br>Claims; page 2, upper left column, lines 11 to 17; examples; comparative examples<br>(Family: none) | 1-7<br>8,9 |
| X<br>Y | JP 11-158526 A (Sumitomo Metal Industries, Ltd.),<br>15 June, 1999 (15.06.99),<br>Claims; Par. Nos. [0001], [0022]; examples; comparative examples<br>(Family: none) | 1-7<br>8,9 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 August, 2002 (07.08.02) | 20 August, 2002 (20.08.02) |

| Name and mailing address of the ISA/<br>Japanese Patent Office | Authorized officer |
|---|---|
| Facsimile No. | Telephone No. |

Form PCT/ISA/210 (second sheet) (July 1998)

43

INTERNATIONAL SEARCH REPORT

| International application No. |
| --- |
| PCT/JP02/04785 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2-172883 A  (Oji Kenzai Kogyo Kabushiki Kaisha), 04 July, 1990 (04.07.90), Claims; examples; comparative examples (Family: none) | 8,9 |
| Y | US 4525197 A  (Schering AG), 25 June, 1985 (25.06.85), Claims; examples; tables & FR 2272969 A1          & JP 50-110859 A | 8,9 |

Form PCT/ISA/210 (continuation of second sheet) (July 1998)

44

EP 1 391 445 A1

## INTERNATIONAL SEARCH REPORT

| International application No. |
| --- |
| PCT/JP02/04785 |

**Box I** Observations where certain claims were found unsearchable (Continuation of item 1 of first sheet)

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II** Observations where unity of invention is lacking (Continuation of item 2 of first sheet)

This International Searching Authority found multiple inventions in this international application, as follows:
(see extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1 to 9

**Remark on Protest** ☐ The additional search fees were accompanied by the applicant's protest.
☐ No protest accompanied the payment of additional search fees.

Form PCT/ISA/210 (continuation of first sheet (1)) (July 1998)

45

INTERNATIONAL SEARCH REPORT

International application No.

PCT/JP02/04785

Continuation of Box No.II of continuation of first sheet(1)

The matter common to claims 1 to 28 is "a material for a phosphate fertilizer, which comprises a slag being formed in the dephosphorization of hot-iron and containing phosphoric acid", and

(1) claim 1 to 9 are inventions wherein the material has a phosphoric acid content in a specific range,

(2) claims 10 to 14 are inventions relating to a method for producing the above material which comprises using a hot-iron having a Si content of a specific value or less,

(3) claims 15 to 17 are inventions relating to a method for producing the above material which comprises supplying CaO at a rate in a specific range, and

(4) claim 18 is an invention of a method for producing the above material which comprises blowing a gas containing a powder into a hot-iron.

Claims 19 to 28 are inventions of production methods which are defined by referring to claims 10 to 18.

The international search has revealed that the above-mentioned matter common to claims 1 to 28 lacks novelty since the matter is disclosed in a document, JP 11- 158526 A (Sumitomo Metal Industries, Ltd) 1999. 06. 15, and therefore, is not a special technical feature in accordance with PCT Rule 13. 2.

There is no other common matter which may be the above special technical feature in the above (1) to (4).

Accordingly, since there is no special technical feature which is common to all the claims, claims 1 to 28 are not a group of inventions which are so linked as to form a single general inventive concept.

Form PCT/ISA/210 (extra sheet) (July 1998)